(19) **Europäisches Patentamt / European Patent Office / Office européen des brevets**

(11) **EP 4 708 067 A1**

(12) **EUROPEAN PATENT APPLICATION**
published in accordance with Art. 153(4) EPC

(43) Date of publication:
**11.03.2026 Bulletin 2026/11**

(21) Application number: **24830754.8**

(22) Date of filing: **25.06.2024**

(51) International Patent Classification (IPC):
**G06F 16/242** (2019.01)   **G06F 16/2455** (2019.01)
**G06F 21/62** (2013.01)

(52) Cooperative Patent Classification (CPC):
**G06F 16/24535; G06F 16/2282**

(86) International application number:
**PCT/CN2024/101287**

(87) International publication number:
**WO 2025/002114 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 CN 202310810125**

(71) Applicant: **Tencent Technology (Shenzhen) Company Limited**
**Shenzhen, Guangdong 518057 (CN)**

(72) Inventors:
• **XIAO, Hanping**
**Shenzhen, Guangdong 518057 (CN)**
• **WU, Xin**
**Shenzhen, Guangdong 518057 (CN)**

• **ZHOU, Ke**
**Shenzhen, Guangdong 518057 (CN)**
• **LI, Chunhua**
**Shenzhen, Guangdong 518057 (CN)**
• **LAN, Hangrun**
**Shenzhen, Guangdong 518057 (CN)**
• **WANG, Guanhua**
**Shenzhen, Guangdong 518057 (CN)**
• **XIE, Canyang**
**Shenzhen, Guangdong 518057 (CN)**
• **PAN, Anqun**
**Shenzhen, Guangdong 518057 (CN)**
• **LEI, Hailin**
**Shenzhen, Guangdong 518057 (CN)**

(74) Representative: **AWA Sweden AB**
**Matrosgatan 1**
**Box 5117**
**200 71 Malmö (SE)**

(54) **DATA TABLE QUERY METHOD AND APPARATUS, STORAGE MEDIUM, AND ELECTRONIC DEVICE**

(57)   The present application discloses a data table query method and apparatus, a storage medium, and an electronic device. The method comprises: acquiring a data table query request; converting the data table query request into a first group of data sub-table query requests; generating a second group of data sub-table query requests, wherein the second group of data sub-table query requests are different from the first group of data sub-table query requests; sending the first group of data sub-table query requests and the second group of data sub-table query requests to a server, and acquiring a first group of query results corresponding to the first group of data sub-table query requests and a second group of query results corresponding to the second group of data sub-table query requests, the first group of query results and the second group of query results being sent by the server. Embodiments of the present application can improve the security of data table query.

EP 4 708 067 A1

Acquire a data table query request, the data table query request being configured to request querying a second data table on a server in order to obtain a second attribute value of a second attribute matching a first attribute value of a first attribute, and the first attribute being arranged in a first data table on the server

S902

Convert the data table query request into a first group of data sub-table query requests, the first group of data sub-table query requests being configured to request querying a second group of data sub-tables in order to obtain the second attribute value of the second attribute matching the first attribute value of the first attribute in a first group of data sub-tables, the first group of data sub-tables being data sub-tables obtained by splitting the first data table based on the attribute values of the first attribute, and the second group of data sub-tables being data sub-tables obtained by splitting the second data table based on the attribute values of the second attribute

S904

Generate a second group of data sub-table query requests, the second group of data sub-table query requests being different from the first group of data sub-table query requests

S906

Transmit the first group of data sub-table query requests and the second group of data sub-table query requests to the server, and acquire a first group of query results corresponding to the first group of data sub-table query requests and a second group of query results corresponding to the second group of data sub-table query requests from the server

S908

FIG. 9

## Description

This application claims priority to Chinese Patent Application No. 202310810125.X, entitled "DATA TABLE QUERY METHOD AND APPARATUS, STORAGE MEDIUM, AND ELECTRONIC DEVICE" filed on June 30, 2023.

## FIELD OF THE TECHNOLOGY

The present disclosure relates to the field of computers, and in particular, to a method and apparatus for querying a data table, a storage medium, and an electronic device.

## BACKGROUND OF THE DISCLOSURE

To improve data security, data in a data table is usually encrypted, for example, data in a data table is often encrypted by a deterministic encryption algorithm.

In related technologies, data in a plurality of data tables usually needs to be jointly queried. For example, data in a plurality of data tables is jointly queried by means of hash-join. Such a method may lead to leak of the frequency of appearance of the data in the data tables. If an attacker already knows an attribute of data in a data table, the attacker may acquire the frequency of appearance of encrypted data without decryption by means of frequency statistics attack, and further speculate a key used by the encrypted data, which results in leak of plaintext data. Therefore, the security of data table query is relatively low.

## SUMMARY

Embodiments of the present disclosure provide a method for querying a data table and apparatus, a storage medium, and an electronic device.

According to an aspect of the embodiments of the present disclosure, a method for querying a data table is provided, including:

acquiring a data table query request, the data table query request being configured to request querying a second data table on a first computer device in order to obtain a second attribute value of a second attribute matching a first attribute value of a first attribute, the first attribute being arranged in a first data table on the first computer device; converting the data table query request into a first group of data sub-table query requests, the first group of data sub-table query requests being configured to request querying a second group of data sub-tables in order to obtain the second attribute value matching the first attribute value in a first group of data sub-tables, the first group of data sub-tables being data sub-tables obtained by splitting the first data table based on a plurality of attribute values of the first attribute, and the second group of data sub-tables being data sub-tables obtained by splitting the second data table based on a plurality of attribute values of the second attribute; generating a second group of data sub-table query requests, the second group of data sub-table query requests being different from the first group of data sub-table query requests; and transmitting the first group of data sub-table query requests and the second group of data sub-table query requests to the first computer device, and acquiring a first group of query results corresponding to the first group of data sub-table query requests and a second group of query results corresponding to the second group of data sub-table query requests from the first computer device.

According to another aspect of the embodiments of the present disclosure, a data table query apparatus is further provided, including:

an acquisition unit, configured to acquire a data table query request, the data table query request being configured to request querying a second data table on a first computer device in order to obtain a second attribute values of a second attribute matching a first attribute value of a first attribute, the first attribute being arranged in a first data table on the first computer device; a conversion unit, configured to convert the data table query request into a first group of data sub-table query requests, the first group of data sub-table query requests being configured to request querying a second group of data sub-tables in order to obtain the second attribute value matching the first attribute value in a first group of data sub-tables, the first group of data sub-tables being data sub-tables obtained by splitting the first data table based on a plurality of attribute values of the first attribute, and the second group of data sub-tables being data sub-tables obtained by splitting the second data table based on a plurality of attribute values of the second attribute; a generation unit, configured to generate a second group of data sub-table query requests, the second group of data sub-table query requests being different from the first group of data sub-table query requests; and a transmission unit, configured to transmit the first group of data sub-table query requests and the second group of data sub-table query requests to the first computer device, and acquire a first group of query results corresponding to the first group of data sub-table query requests and a second group of query results corresponding to the second group of data sub-table query requests from the first computer device.

According to still another aspect of the embodiments of the present disclosure, a computer-readable storage medium is further provided, having a computer program stored therein, the computer program being configured that when the computer program is run, the foregoing method for querying a data table is performed.

According to still another aspect of the embodiments of the present disclosure, a computer program product or a computer program is provided, including computer instructions stored in a computer-readable storage medium. A processor of a computer device reads the computer instructions from the computer-readable storage medium, and executes the computer instructions, to enable the computer device to perform the foregoing method for querying a data table.

According to still another aspect of the embodiments of the present disclosure, an electronic device is further provided, including a memory and a processor, the memory having a computer program stored therein, and the processor being configured to perform the foregoing method for querying a data table via the computer program.

In the embodiments of the present disclosure, a data table query request acquired at a client is converted into a first group of data sub-table query requests, and a second group of data sub-table query requests are generated. On one hand, when the client randomly transmits the first group of data sub-table query requests and the second group of data sub-table query requests to a server, transmission of the second group of data sub-table query requests may interfere with the transmission sequence of query requests in the first group of data sub-table query requests. On the other hand, the query results of the second group of data sub-table query requests may interfere with statistics collection on the frequency of the query results of the first group of data sub-table query requests. The returned second group of query results are unrelated to the first group of query results. In this manner, statistical analysis performed by the frequency of appearance of ciphertext data in the query results of the first group of data sub-table query requests is obfuscated, thereby improving the security of data table query.

BRIEF DESCRIPTION OF THE DRAWINGS

The accompanying drawings described herein are configured for providing a further understanding of the present disclosure, and form part of the present disclosure. Embodiments of the present disclosure and descriptions thereof are configured for explaining the present disclosure, and do not constitute any inappropriate limitation to the present disclosure. In the accompanying drawings:

FIG. 1 is a schematic diagram of a first data table according to all embodiments of the present disclosure.

FIG. 2 is a schematic diagram of a second data table according to all embodiments of the present disclosure.

FIG. 3 is a schematic diagram of a third data table according to all embodiments of the present disclosure.

FIG. 4 is a schematic diagram of a fourth data table according to all embodiments of the present disclosure.

FIG. 5 is a schematic diagram of a hash ciphertext table according to all embodiments of the present disclosure.

FIG. 6 is a schematic diagram of a sub-table mapping table according to all embodiments of the present disclosure.

FIG. 7 is a schematic diagram of distribution information according to all embodiments of the present disclosure.

FIG. 8 is a schematic diagram of an application scenario of a method for querying a data table according to all embodiments of the present disclosure.

FIG. 9 is a schematic flowchart of the method for querying a data table according to all embodiments of the present disclosure.

FIG. 10 is a schematic diagram I of a second group of data sub-table query requests according to all embodiments of the present disclosure.

FIG. 11 is a schematic diagram II of a second group of data sub-table query requests according to all embodiments of the present disclosure.

FIG. 12 is a schematic diagram of a first matching condition according to all embodiments of the present disclosure.

FIG. 13 is a schematic diagram of a second matching condition according to all embodiments of the present disclosure.

FIG. 14 is a schematic diagram of a third matching condition according to all embodiments of the present disclosure.

FIG. 15 is a schematic diagram of a fourth matching condition according to all embodiments of the present disclosure.

FIG. 16 is a schematic diagram of a first group of query results and a second group of query results according to all embodiments of the present disclosure.

FIG. 17 is a schematic diagram I of a second smoothing process according to all embodiments of the present disclosure.

FIG. 18 is a schematic diagram II of the second smoothing process according to all embodiments of the present disclosure.

FIG. 19 is a schematic diagram of determination of a chi-square value according to all embodiments of the present disclosure.

FIG. 20 is a schematic diagram of random transmission of a data sub-table query request according to all embodiments of the present disclosure.

FIG. 21 is a schematic diagram of a smoothing process performed on a split data sub-table according to all embodiments of the present disclosure.

FIG. 22 is a schematic diagram of the same hash values according to all embodiments of the present disclosure.

FIG. 23 is a schematic diagram of a method for querying a data table according to all embodiments of the present disclosure.

FIG. 24 is a schematic diagram of query latency of a data table according to all embodiments of the present disclosure.

FIG. 25 is a schematic diagram of a structure of a data table query apparatus according to all embodiments of the present disclosure.

FIG. 26 is a schematic diagram of the structure of an electronic device according to all embodiments of the present disclosure.

FIG. 27 is a block diagram of the structure of a computer system of an electronic device according to all embodiments of the present disclosure.

DESCRIPTION OF EMBODIMENTS

In order to make those skilled in the art better understand the solutions of the present disclosure, the following clearly and completely describes the technical solutions in the embodiments of the present disclosure with reference to the accompanying drawings in the embodiments of the present disclosure. Apparently, the described embodiments are merely some of the embodiments of the present disclosure rather than all of the embodiments.

The terms "first", "second", and the like in the specification, claims, and drawings of the present disclosure are intended to distinguish between similar objects, rather than describe a specific sequence or order. Such used data is interchangeable where appropriate so that the embodiments of the present disclosure described here can be implemented in an order other than those illustrated or described here. Moreover, the terms "include", "have" and any variants thereof mean to cover the non-exclusive inclusion, for example, a process, method, system, product, or device that includes a list of steps or units is not necessarily limited to those expressly listed steps or units, but may include other steps or units that are not expressly listed or are inherent to such a process, method, product, or device.

First, some nouns or terms that appear in the descriptions of the embodiments of the present disclosure are explained as follows:

Hash-join: Hash-join is a relational database query optimization technology, which uses a hash table to accelerate a table join operation in a database and is usually faster than conventional nested-loop join and sort-merge join. Specifically, hash-join is configured for performing a join operation in two or more data tables. When a join operation is performed, one or more columns in two tables usually need to be compared, to find a matching row. Hash-join allocates columns in a data table to different hash buckets by using a hash function, and when a join operation is performed, only data in the hash buckets needs to be compared, thereby improving the query efficiency. Hash-join is usually applicable to a join operation of a large data table, and the performance may be further improved by parallel processing.

Deterministic encryption: A deterministic encryption technology is an encryption technology, and can convert plaintext data into ciphertext data, while maintaining consistency between the plaintext data and the ciphertext data. This means that for given plaintext data, the same ciphertext data is always generated by a deterministic encryption algorithm.

Statistical analysis attack: Statistical analysis attack is an attack method against an encrypted system. An attacker speculates an encryption key or plaintext data by performing statistical analysis on encrypted data. Statistical analysis attack may use features such as the pattern, repeatability, and correlation in encrypted data, to decrypt an encrypted system.

Security model: A security model uses a passive persistent adversary for an encrypted database. The adversary may observe all encrypted access, but does not actively perform his own access. Such a model better conforms to a case where internal personnel may possibly cause data leak in an actual industrial environment. In addition, a preset premise is that it is known in which attribute columns in a data table a table join operation will be performed.

Attack model: Frequency analysis attack is a cryptographic attack method, and is configured for decrypting an encrypted text. The attack method is based on an assumption, i.e., in an encrypted text, the frequency of appearance of some letters or letter combinations is higher than that of other letters or letter combinations. By performing frequency analysis on the encrypted text, an attacker may speculate a letter or a letter combination with the highest frequency of appearance in the encrypted text, thereby speculating a key used in an encryption algorithm.

Chosen-plaintext attack (CPA) security: CPA security is a security property of an encryption algorithm, and indicates that when the encryption algorithm selects plaintext data, an attacker cannot distinguish encrypted ciphertext data from randomly generated ciphertext data. This means that the attacker cannot speculate related information of the plaintext data from the ciphertext data, thereby ensuring the security of the encrypted data. CPA security is one of the basic security properties of a modern encryption algorithm, and is usually configured for evaluating the security and strength of an encryption algorithm.

Advanced encryption standard (AES): An AES encryption algorithm encrypts and decrypts data by a symmetric key, encrypts data in blocks by a block cipher method, and is widely considered as a secure and reliable encryption technology.

According to an aspect of the embodiments of the present disclosure, a method for querying a data table is provided. To better understand an application scenario of the method for querying a data table in the embodiments of the present disclosure, the application scenario of the method for querying a data table in the embodiments of the present disclosure is explained and described below with reference to the embodiments.

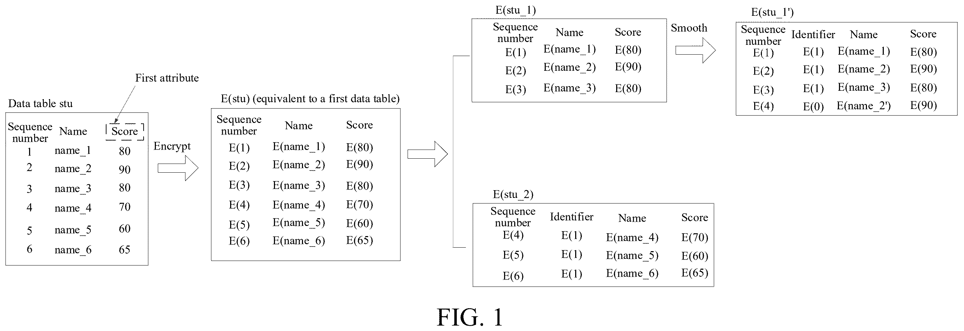

As shown in FIG. 1, a data table stu may, but is not limited to, record sequence numbers 1 to 6 and scores (which may, but are not limited to, be 80, 90, 80, 70, 60, and 65 respectively) of names name_1 to name_6. The sequence numbers, names, scores, and the like in the data table stu may, but are not limited to, be encrypted to obtain E(stu), where the E(stu) is, for example, a first data table.

In some embodiments of the present disclosure, a symmetric encryption algorithm, such as an AES encryption algorithm, or a data encryption standard (DES) encryption algorithm, or an asymmetric encryption algorithm (such as a Rivest-Shamir-Adleman (RSA) encryption algorithm, or elliptic curve cryptography (ECC)) may, but is not limited to, be used, which improves the data security.

The data table E(stu) may, but is not limited to, record encrypted sequence numbers E(1) to E(6) and encrypted scores (which may, but are not limited to, be E(80), E(90), E(80), E(70), E(60), and E(65) respectively) of encrypted names E(name_1) to E(name_6). The data table E(stu) may, but is not limited to, be split into a data sub-table E(stu_1) and a data sub-table E(stu_2) based on the value ranges of the scores recorded in the data table E(stu). A value range of scores in the data sub-table E(stu_1) is 75 to 100, and a value range of scores in the data sub-table E(stu_2) is 60 to 75. The data sub-table E(stu_1) records the encrypted sequence numbers E(1) to E(3), and the encrypted scores (which may, but are not limited to, be E(80), E(90), and E(80) respectively) corresponding to the encrypted names E(name_1) to E(name_3). The data sub-table E(stu_2) records the encrypted sequence numbers E(4) to E(6), and the encrypted scores (which may, but are not limited to, be E(70), E(60), and E(65) respectively) corresponding to the encrypted names E(name_4) to E(name_6).

The frequencies of appearance of the scores of different values in the data sub-table E(stu_1) are different. To obfuscate the frequencies of appearance of the scores of different values in the data sub-table E(stu_1), a smoothing process (e.g., first smoothing process) may, but is not limited to, be performed on the data sub-table E(stu_1), to obtain a data sub-table E(stu_1'). The E(stu_1') may, but is not limited to, record the encrypted sequence numbers E(1) to E(4), the encrypted scores (which may, but are not limited to, be E(80), E(90), E(80), and E(90) respectively) of the encrypted names E(name_1) to E(name_3) and E(name_2'), and identifiers (which may, but are not limited to, be E(1), E(1), E(1), and E(0) respectively) of the encrypted scores of the encrypted names E(name_1) to E(name_3) and E(name_2'). In some embodiments of the present disclosure, E(1) represents a real score recorded in the data sub-table E(stu_1), and E(0) represents a virtual score introduced to perform the smoothing process on the frequency of appearance of data in the E(stu_1).

The frequencies of appearance of the scores of different values in the data sub-table E(stu_2) are the same. Thus, the smoothing process (e.g., first smoothing process) needs not to be performed on the data sub-table E(stu_2). Each piece of data in the data sub-table E(stu_2) may, but is not limited to, be recorded with the identifier E(1), to represent that each piece of data in the data sub-table E(stu_2) is real data from the data table E(stu).

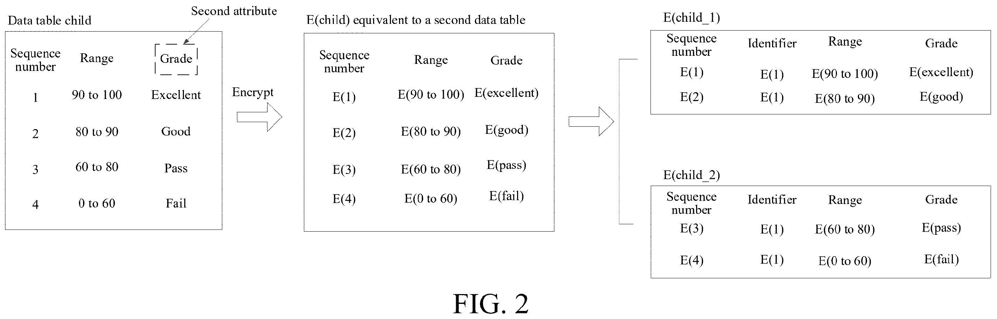

As shown in FIG. 2, a data table child may, but is not limited to, record that a score range corresponding to a sequence number 1 is 90 to 100, and a grade corresponding to the score range 90 to 100 is "excellent"; a score range corresponding to a sequence number 2 is 80 to 90, and a grade corresponding to the score range of 80 to 90 is "good"; a score range corresponding to a sequence number 3 is 60 to 80, and a grade corresponding to the score range 60 to 80 is "pass"; and a score range corresponding to a sequence number 4 is 0 to 60, and a grade corresponding to the score range 0 to 60 is "fail".

The sequence numbers, ranges, and grades in the data table child may, but are not limited to, be encrypted by a symmetric encryption algorithm or asymmetric encryption algorithm, or the like, to obtain a data table E(child), where the E(child) is, for example, a second data table. The data table E(child) records that an encrypted score range corresponding to an encrypted sequence number E(1) is E(90 to 100), and an encrypted grade corresponding to the encrypted score range E(90 to 100) is E(excellent); an encrypted score range corresponding to an encrypted sequence number E(2) is E(80 to 90), and an encrypted grade corresponding to the encrypted score range E(80 to 90) is E(good); an encrypted score range corresponding to an encrypted sequence number E(3) is E(60 to 80), and an encrypted grade corresponding to the encrypted score range E(60 to 80) is E(pass); and a score range corresponding to an encrypted sequence number E(4) is E(0 to 60), and an encrypted grade corresponding to the score range E(0 to 60) is E(fail).

The data table E(child) may, but is not limited to, be split into a data sub-table E(child_1) and a data sub-table E(child_2) based on the grade ranges recorded in the data table E(child). The grade ranges in the data sub-table E(child_1) are excellent and good, and the grade ranges in the data sub-table E(child_2) are pass and fail. The data sub-table E(child_1) records that the encrypted score range corresponding to the encrypted sequence number E(1) is E(90 to 100), and the encrypted grade corresponding to the encrypted score range E(90 to 100) is E(excellent); and the encrypted score range corresponding to the encrypted sequence number E(2) is E(80 to 90), and the encrypted grade corresponding to the encrypted score range E(80 to 90) is E(good). The data sub-table E(child_2) records that the encrypted score range corresponding to the encrypted sequence number E(3) is E(60 to 80), and the encrypted grade corresponding to the encrypted score range E(60 to 80) is E(pass); and the encrypted score range corresponding to the encrypted sequence number E(4) is E(0 to 60), and the encrypted grade corresponding to the encrypted score range E(0 to 60) is E(fail).

The frequencies of appearance of different grades in the data sub-table E(child_1) and the data sub-table E(child_2) are the same. Thus, the smoothing process (e.g., first smoothing process) needs not to be performed on the data sub-table E(child_1) and the data sub-table E(child_2). Each piece of data in the data sub-table E(child_1) and the data sub-table E(child_2) may, but is not limited to, be recorded with the identifier E(1). The identifier E(1) represents that each piece of data in the data sub-table E(child_1) and the data sub-table E(child_2) is real data from the data table E(child).

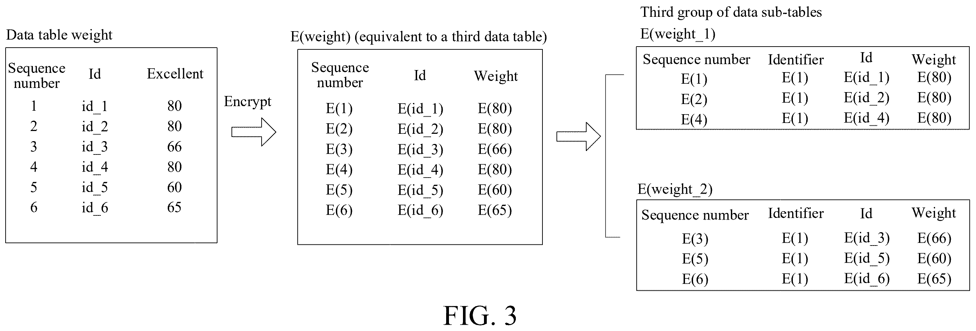

As shown in FIG. 3, a data table weight records that an identity document (Id) corresponding to a sequence number 1 is Id_1, and a weight corresponding to the Id_1 is 80; an Id corresponding to a sequence number 2 is Id_2, and a weight corresponding to the Id_2 is 80; an Id corresponding to a sequence number 3 is Id_3, and a weight corresponding to the Id_3 is 66; an Id corresponding to a sequence number 4 is Id_4, and a weight corresponding to the Id_4 is 80; an Id corresponding to a sequence number 5 is Id_5, and a weight corresponding to the Id_5 is 60; and an Id corresponding to a sequence number 6 is Id_6, and a weight corresponding to the Id_6 is 65.

The sequence numbers, Ids, weights, and the like in the data table weight may, but are not limited to, be encrypted by a symmetric encryption algorithm or asymmetric encryption algorithm, or the like, to obtain a data table E(weight), where the E(weight) is, for example, a third data table. The data table E(weight) records that an encrypted Id corresponding to an encrypted sequence number E(1) is E(Id_1), and an encrypted weight corresponding to the E(Id_1) is E(80); an encrypted Id corresponding to an encrypted sequence number E(2) is E(Id_2), and an encrypted weight corresponding to the E(Id_2) is E(80); an encrypted Id corresponding to an encrypted sequence number E(3) is E(Id_3), and an encrypted weight corresponding to the E(Id_3) is E(66); an encrypted Id corresponding to an encrypted sequence number E(4) is E(Id_4), and an encrypted weight corresponding to the E(Id_4) is 80; an encrypted Id corresponding to an encrypted sequence number E(5) is E(Id_5), and an encrypted weight corresponding to the E(Id_5) is E(60); and an encrypted Id corresponding to an encrypted sequence number E(6) is E(Id_6), and an encrypted weight corresponding to the E(Id_6) is E(65).

The data table E(weight) may, but is not limited to, be split into a data sub-table E(weight_1) and a data sub-table E(weight_2) based on the value ranges of weights. The value range of weights in the data sub-table E(weight_1) is 80 to 100, and the value range of weights in the data sub-table E(weight_2) is 60 to 80.

The data sub-table E(weight_1) records that the encrypted Id corresponding to the encrypted sequence number E(1) is E(Id_1), and the encrypted weight corresponding to the E(Id_1) is E(80); the encrypted Id corresponding to the encrypted sequence number E(2) is E(Id_2), and the encrypted weight corresponding to the E(Id_2) is E(80); and the encrypted Id corresponding to the encrypted sequence number E(4) is E(Id_4), and the encrypted weight corresponding to the E(Id_4) is 80. The data sub-table E(weight_2) records that the encrypted Id corresponding to the encrypted sequence number E(3) is E(Id_3), and the encrypted weight corresponding to the E(Id_3) is E(66); the encrypted Id corresponding to the encrypted sequence number E(5) is E(Id_5), and the encrypted weight corresponding to the E(Id_5) is E(60); and the encrypted Id corresponding to the encrypted sequence number E(6) is E(Id_6), and the encrypted weight corresponding to the E(Id_6) is E(65).

The frequencies of appearance of data of the weights of different values in the data sub-table E(weight_1) and the data sub-table E(weight_2) are the same. Thus, the smoothing process (e.g., first smoothing process) needs not to be performed on the data sub-table E(weight_1) and the data sub-table E(weight_2), and each piece of data in the data sub-table E(weight_1) and the data sub-table E(weight_2) is recorded with the identifier E(1), to represent that each piece of data in the data sub-table E(weight_1) and the data sub-table E(weight_2) is real data from the data table E(weight).

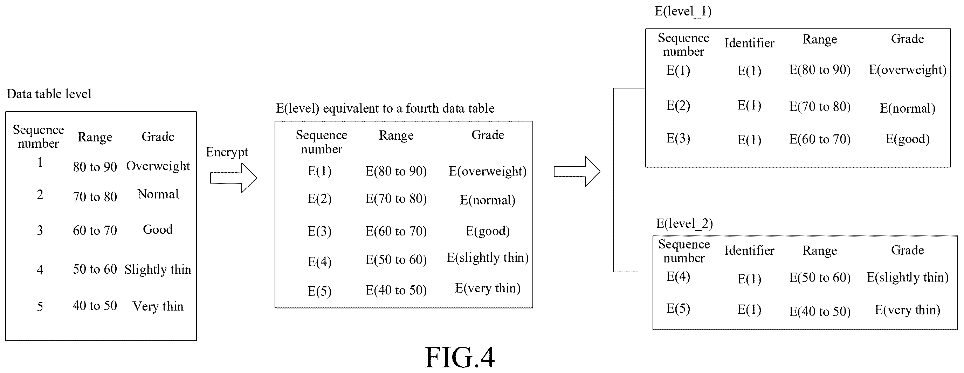

As shown in FIG. 4, a data table level may, but is not limited to, record that a weight range corresponding to a sequence number 1 is 80 to 90, and a grade corresponding to the weight range 80 to 90 is "overweight"; a weight range corresponding to a sequence number 2 is 70 to 80, and a grade corresponding to the weight range 70 to 80 is "normal"; a weight range corresponding to a sequence number 3 is 60 to 70, and a grade corresponding to the weight range 60 to 70 is "good"; a weight range corresponding to a sequence number 4 is 50 to 60, and a grade corresponding to the weight range 50 to 60 is "slightly thin"; and a weight range corresponding to a sequence number 5 is 40 to 50, and a grade corresponding to the weight range 40 to 50 is "very thin".

The sequence numbers, weight ranges, and grades in the data table level may, but are not limited to, be encrypted by a symmetric encryption algorithm or asymmetric encryption algorithm, or the like, to obtain a data table E(level), where the E(level) is, for example, a fourth data table. The data table E(level) records that an encrypted weight range corresponding to an encrypted sequence number E(1) is E(80 to 90), and an encrypted grade corresponding to the encrypted weight range E(80 to 90) is E(overweight); an encrypted weight range corresponding to an encrypted sequence number E(2) is E(70 to 80), and an encrypted grade corresponding to the encrypted weight range E(70 to 80) is E(normal); an encrypted weight range corresponding to an encrypted sequence number E(3) is E(60 to 70), and an encrypted grade corresponding to the encrypted weight range E(60 to 70) is E(good); an encrypted weight range corresponding to an encrypted sequence number E(4) is E(50 to 60), and an encrypted grade corresponding to the encrypted weight range E(50 to 60) is E(slightly thin); and an encrypted weight range corresponding to an encrypted sequence number E(5) is E(40 to 50), and an encrypted grade corresponding to the encrypted weight range E(40 to 50) is E(very thin).

The data table E(level) may, but is not limited to, be split into a data sub-table E(level_1) and a data sub-table E(level_2) based on the grade ranges recorded in the data table E(level). The grade ranges in the data sub-table E(level_1) are overweight, normal, and good, and the grade ranges in the data sub-table E(level_2) are slightly thin and very thin. The data sub-table E(level_1) records that the encrypted weight range corresponding to the encrypted sequence number E(1) is E(80 to 90), and the encrypted grade corresponding to the encrypted weight range E(80 to 90) is E(overweight); the encrypted weight range corresponding to the encrypted sequence number E(2) is E(70 to 80), and the encrypted grade corresponding to the encrypted weight range E(70 to 80) is E(normal); and the encrypted weight range corresponding to the encrypted sequence number E(3) is E(60 to 70), and the encrypted grade corresponding to the encrypted weight range E(60 to 70) is E(good). The data sub-table E(level_2) records that the encrypted weight range corresponding to the encrypted sequence number E(4) is E(50 to 60), and the encrypted grade corresponding to the encrypted weight range E(50 to 60) is E(slightly thin); and the encrypted weight range corresponding to the encrypted sequence number E(5) is E(40 to 50), and the encrypted grade corresponding to the encrypted weight range E(40 to 50) is E(very thin).

The frequencies of appearance of different grades in the data sub-table E(level_1) and the data sub-table E(level_2) are the same. Thus, the smoothing process (e.g., first smoothing process) needs not to be performed on the data sub-table E(level_1) and the data sub-table E(level_2), and each piece of data in the data sub-table E(level_1) and the data sub-table E(level_2) may, but is not limited to, be recorded with the identifier E(1). The identifier E(1) represents that each piece of data in the data sub-table E(level_1) and the data sub-table E(level_2) is real data from the data table E(level).

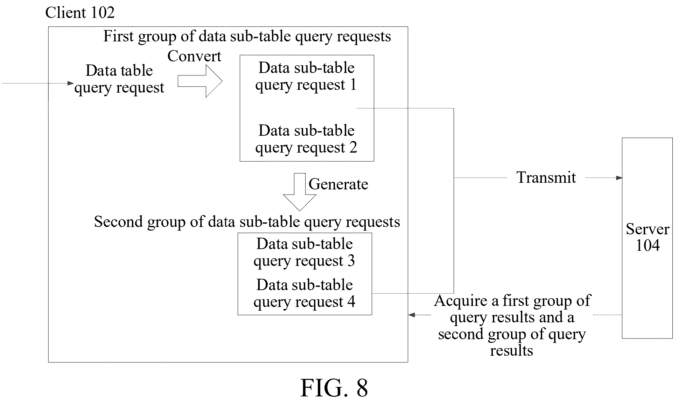

A server 104 (referring to FIG. 8) may, but is not limited to, store the data table E(stu), the data sub-table E(stu_1') and the data sub-table E(stu_2) corresponding to the data table E(stu), and hash ciphertext tables corresponding to the data sub-table E(stu_1') and the data sub-table E(stu_2) respectively; the data table E(child), the data sub-table E(child_1) and the data sub-table E(child_2) corresponding to the data table E(child), and hash ciphertext tables corresponding to the data sub-table E(child_1) and the data sub-table E(child_2) respectively; the data table E(weight), the data sub-table E(weight_1) and the data sub-table E(weight_2) corresponding to the data table E(weight), and hash ciphertext tables corresponding to the data sub-table E(weight_1) and the data sub-table E(weight_2) respectively; and the data table E(level), the data sub-table E(level_1) and the data sub-table E(level_2) corresponding to the data table E(level), and hash ciphertext tables corresponding to the data sub-table E(level_1) and the data sub-table E(level_2) respectively.

The hash ciphertext tables stored in the server in some embodiments of the present disclosure may, but are not limited to, be explained and described by taking the data sub-table E(stu_1') as an example. The form of the hash ciphertext tables corresponding to the data sub-table E(stu_2), the data sub-table E(child_1), the data sub-table E(child_2), and the like is similar to that corresponding to the data sub-table E(stu_1').

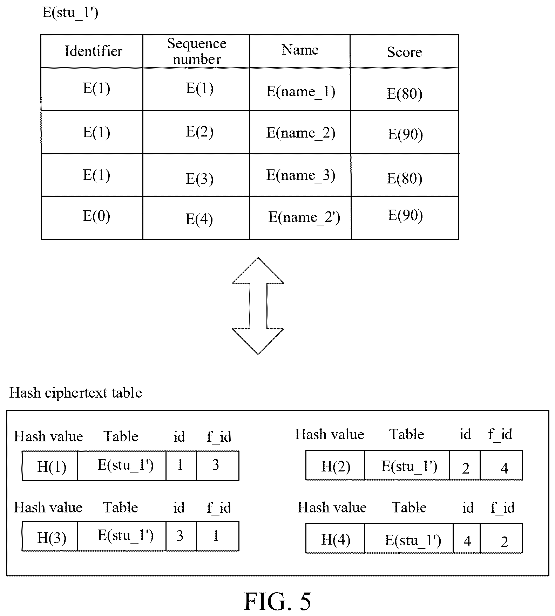

As shown in FIG. 5, the hash ciphertext table corresponding to the data sub-table E(stu_1') stores hash data corresponding to an encrypted score E(80) corresponding to the encrypted sequence number E(1), hash data corresponding to an encrypted score E(90) corresponding to the encrypted sequence number E(2), hash data corresponding to an encrypted score E(80) corresponding to the encrypted sequence number E(3), and hash data corresponding to an encrypted score E(90) corresponding to the encrypted sequence number E(4). The hash data in the hash ciphertext table may, but is not limited to, be stored in an inverted index table form, and is in a quadruple form <value, table, id, f_id>, where the value is an encrypted hash value and is configured for hash-join operations on a plurality of hash ciphertext tables. The table is the table name of an encrypted data table corresponding to the data (e.g., the data table E(stu_1')). The id is the location of the data in the encrypted data table (e.g., the row where the data is located in the encrypted data table and which data in an attribute column (e.g., a column where scores are recorded)). The id and the table are configured for positioning the encrypted data table and the data row to which a hash-join result belongs. Specifically, the id and the table may, but are not limited to, be configured for positioning the location of the data in the corresponding encrypted data table, to acquire the corresponding encrypted data from the encrypted data table. In addition, by using the inverted index table, the attribute values of attributes between data tables may be joined directly via hash values recorded in the inverted index table, thereby improving the efficiency of joining data in a plurality of data tables. Moreover, the location of data that needs to be modified or deleted in the encrypted data table may be accurately found via the id and the table recorded in the inverted index table, thereby improving the data modification efficiency.

The hash data corresponding to the encrypted score E(80) corresponding to the encrypted sequence number E(1) stores a hash value H(1) corresponding to the encrypted score E(80), the table E(stu_1') to which the encrypted score E(80) corresponding to the encrypted sequence number E(1) belongs, the id of the encrypted score E(80) corresponding to the encrypted sequence number E(1), and the f_id of the encrypted score E(80) corresponding to the encrypted sequence number E(1). The id of the encrypted score E(80) corresponding to the encrypted sequence number E(1) is 1, which represents that the encrypted score E(80) corresponding to the encrypted sequence number E(1) is the first piece of data in a score column in the data sub-table E(stu_1'). The f_id of the encrypted score E(80) corresponding to the encrypted sequence number E(1) is 3, which is configured for representing that the next piece of data in which the score is 80 in the data sub-table E(stu_1') is the third piece of data in the column where scores are recorded.

The hash data corresponding to the encrypted score E(90) corresponding to the encrypted sequence number E(2) stores a hash value H(2) corresponding to the encrypted score E(90), the table E(stu_1') to which the encrypted score E(90) corresponding to the encrypted sequence number E(2) belongs, the id of the encrypted score E(90) corresponding to the encrypted sequence number E(2), and the f_id of the encrypted score E(90) corresponding to the encrypted sequence number E(2). The id of the encrypted score E(90) corresponding to the encrypted sequence number E(2) is 2, which represents that the encrypted score E(90) corresponding to the encrypted sequence number E(2) is the second piece of data in the score column in the data sub-table E(stu_1'). The f_id of the encrypted score E(90) corresponding to the encrypted sequence number E(2) is 4, which is configured for representing that the next piece of data in which the score is 90 in the data sub-table E(stu_1') is the fourth piece of data in the column where scores are recorded.

The hash data corresponding to the encrypted score E(80) corresponding to the encrypted sequence number E(3) stores a hash value H(3) corresponding to the encrypted score E(80), the table E(stu_1') to which the encrypted score E(80) corresponding to the encrypted sequence number E(3) belongs, the id of the encrypted score E(80) corresponding to the encrypted sequence number E(3), and the f_id of the encrypted score E(80) corresponding to the encrypted sequence number E(3). The id of the encrypted score E(80) corresponding to the encrypted sequence number E(3) is 3, which represents that the encrypted score E(80) corresponding to the encrypted sequence number E(3) is the third piece of data in the score column in the data sub-table E(stu_1'). The f_id of the encrypted score E(80) corresponding to the encrypted sequence number E(3) is 1, which is configured for representing that the next piece of data in which the score is 80 in the data sub-table E(stu_1') is the first piece of data in the column where scores are recorded.

The hash data corresponding to the encrypted score E(90) corresponding to the encrypted sequence number E(4) stores a hash value H(4) corresponding to the encrypted score E(90), the table E(stu_1') to which the encrypted score E(90) corresponding to the encrypted sequence number E(4) belongs, the id of the encrypted score E(90) corresponding to the encrypted sequence number E(4), and the f_id of the encrypted score E(90) corresponding to the encrypted sequence number E(4). The id of the encrypted score E(90) corresponding to the encrypted sequence number E(4) is 4, which represents that the encrypted score E(90) corresponding to the encrypted sequence number E(4) is the fourth piece of data in the score column in the data sub-table E(stu_1'). The f_id of the encrypted score E(90) corresponding to the encrypted sequence number E(4) is 2, which is configured for representing that the next piece of data in which the score is 90 in the data sub-table E(stu_1') is the second piece of data in the column where scores are recorded.

In a case that the data sub-table E(stu_1') does not have the next piece of data in which the score is 90, the f_id of the encrypted score E(90) corresponding to the encrypted sequence number E(4) may, but is not limited to, be recorded as -1.

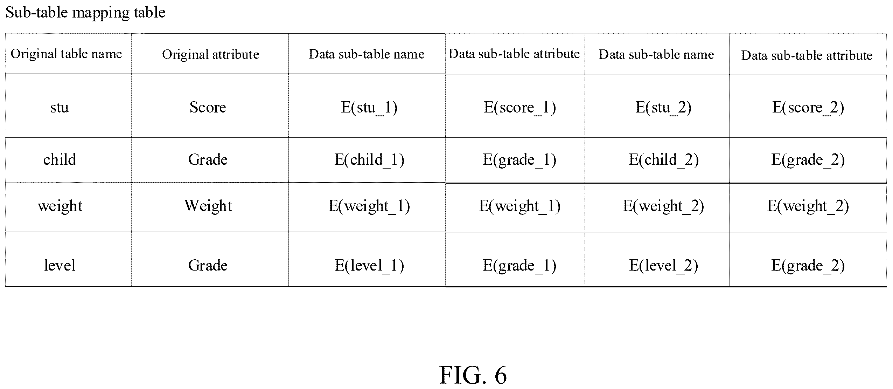

A client 102 (referring to FIG. 8) may, but is not limited to, store a sub-table mapping table and distribution information. As shown in FIG. 6, the sub-table mapping table in the client 102 stores unencrypted original table names and original attributes, as well as encrypted data sub-table names and data sub-table attributes. Specifically, the sub-table mapping table stores the table name "stu" of the data table stu, the name "score" of an attribute in the data table stu, the table name E(stu_1) of the data sub-table corresponding to the data table stu, an attribute E(score_1) of the data sub-table E(stu_1), the table name E(stu_2) of the data sub-table corresponding to the data table stu, and an attribute E(score_2) of the data sub-table E(stu_2).

The sub-table mapping table stores the table name "child" of the data table child, the name "grade" of an attribute in the data table child, the table name E(child_1) of the data sub-table corresponding to the data table child, an attribute E(grade_1) of the data sub-table E(child_1), the table name E(child_2) of the data sub-table corresponding to the data table child, and an attribute E(grade_2) of the data sub-table E(child_2). The sub-table mapping table stores the table name "weight" of the data table weight, the name "weight" of an attribute in the data table weight, the table name E(weight_1) of the data sub-table corresponding to the data table weight, an attribute E(weight_1) of the data sub-table E(weight_1), the table name E(weight_2) of the data sub-table corresponding to the data table weight, and an attribute E(weight_2) of the data sub-table E(weight_2). The sub-table mapping table stores the table name "level" of the data table level, the name "grade" of an attribute in the data table level, the table name E(level_1) of the data sub-table corresponding to the data table level, an attribute E(grade_1) of the data sub-table E(level_1), the table name E(level_2) of the data sub-table corresponding to the data table level, and an attribute E(grade_2) of the data sub-table E(level_2).

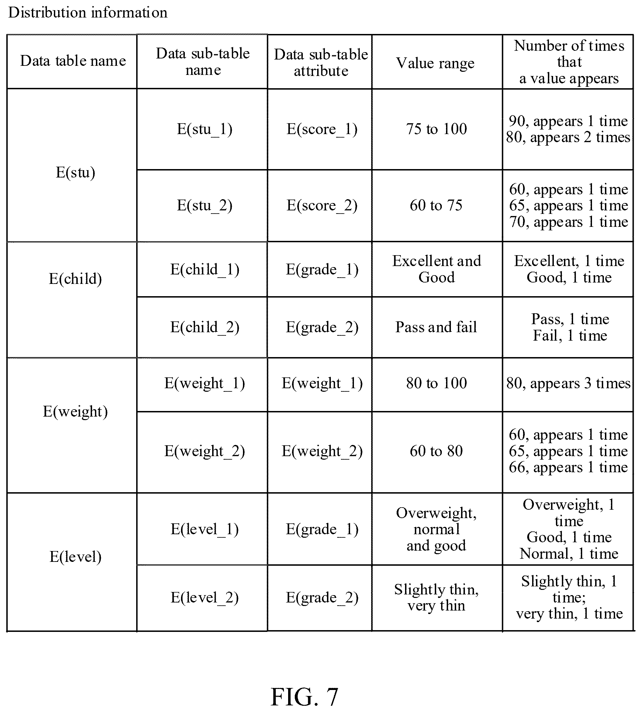

The client 102 may also, but is not limited to, store the distribution information. As shown in FIG. 7, the distribution information may, but is not limited to, include data sub-table names, data sub-table attributes, value ranges, and the numbers of times that values appear. Specifically, the distribution information may, but is not limited to, include the table name E(stu_1) of the data sub-table E(stu_1), the attribute E(score_1) of the data sub-table E(stu_1), a value range 75 to 100 of the attribute values of the attribute E(score_1), and the numbers of times that the scores of different values appear in the data sub-table E(stu_1), for example, 90 appears 1 time, and 80 appears 2 times. The distribution information may also, but is not limited to, include the table name E(stu_2) of the data sub-table E(stu_2), the attribute E(score_2) of the data sub-table E(stu_2), a value range 60 to 75 of the attribute values of the attribute E(score_2), and the numbers of times that the scores of different values appear in the data sub-table E(stu_2), for example, 60 appears 1 time, 65 appears 1 time, and 70 appears 1 time.

The distribution information may, but is not limited to, include the table name E(child_1) of the data sub-table E(child_1), the attribute E(grade_1) of the data sub-table E(child_1), value ranges "excellent" and "good" of the attribute values of the attribute E(grade_1), and the numbers of times that the scores of different values appear in the data sub-table E(child_1), for example, "excellent" and "good" appear 1 time respectively. The distribution information may also, but is not limited to, include the table name E(child_2) of the data sub-table E(child_2), the attribute E(grade_2) of the data sub-table E(child_2), value ranges "pass" and "fail" of the attribute values of the attribute E(grade_2), and the numbers of times that the scores of different values appear in the data sub-table E(child_2), for example, "pass" and "fail" appear 1 time respectively.

The distribution information may, but is not limited to, include the table name E(weight_1) of the data sub-table E(weight_1), the attribute E(weight_1) of the data sub-table E(weight_1), a value range 80 to 100 of the attribute values of the attribute E(weight_1), and the numbers of times that the weights of different values appear in the data sub-table E(weight_1), for example, 80 appears 3 times. The distribution information may also, but is not limited to, include the table name E(weight_2) of the data sub-table E(weight_2), the attribute E(weight_2) of the data sub-table E(weight_2), a value range 60 to 80 of the attribute values of the attribute E(weight_2), and the numbers of times that the weights of different values appear in the data sub-table E(weight_2), for example, 60 appears once, 65 appears 1 time, and 66 appears 1 time.

The distribution information may, but is not limited to, include the table name E(level_1) of the data sub-table E(level_1), the attribute E(grade_1) of the data sub-table E(level_1), value ranges "overweight", "normal", and "good" of the attribute values of the attribute E(grade_1), and the numbers of times that the weights of different values appear in the data sub-table E(level_1), for example, "overweight" appears 1 time, "normal" appears 1 time, and "good" appears 1 time. The distribution information may also, but is not limited to, include the table name E(level_2) of the data sub-table E(level_2), the attribute E(grade_2) of the data sub-table E(level_2), value ranges "slightly thin" and "very thin" of the attribute values of the attribute E(grade_2), and the numbers of times that the weights of different values appear in the data sub-table E(level_2), for example, "slightly thin" and "very thin" appear once respectively.

In the embodiments, the method for querying a data table may, but is not limited to, be applied to an environment shown in FIG. 8, and the method for querying a data table in some embodiments of the present disclosure may, but is not limited to, be implemented by the following operations:

Operation S801: Acquire a data table query request at the client 102. The data table query request is configured to request querying a second data table (e.g., the data table E(child)) on the server 104 in order to obtain the attribute values of a second attribute (e.g., grade) matching the attribute values of a first attribute (e.g., score). The first attribute is an attribute included in a first data table (e.g., the data table E(stu)) on the server 104.

Operation S802: Convert the data table query request into a first group of data sub-table query requests. The first group of data sub-table query requests are configured to request querying a second group of data sub-tables (which may, but are not limited to, include the data sub-table E(child_1) and the data sub-table E(child_2)) in order to obtain the attribute values of the second attribute (e.g., grade) matching the attribute values of the first attribute (e.g., score) in a first group of data sub-tables (which may, but are not limited to, include the data sub-table E(stu_1) and the data sub-table E(stu_2)). The first group of data sub-tables are data sub-tables obtained by splitting the first data table (e.g., the data table E(stu)) based on the plurality of attribute values of the first attribute (e.g., score). The second group of data sub-tables are data sub-tables obtained by splitting the second data table (e.g., the data table E(child)) based on the plurality of attribute values of the second attribute (e.g., grade).

The first group of data sub-table query requests may, but are not limited to, include a data sub-table query request 1 and a data sub-table query request 2. The data sub-table query request 1 may, but is not limited to, be configured to request querying the data sub-table E(child_1) and/or the data sub-table E(child_2) in order to obtain the attribute values of the second attribute (e.g., grade) matching the attribute values of the first attribute (e.g., score) in the data sub-table E(stu_1). The data sub-table query request 2 may, but is not limited to, be configured to request querying the data sub-table E(child_1) and/or the data sub-table E(child_2) in order to obtain the attribute values of the second attribute (e.g., grade) matching the attribute values of the first attribute (e.g., score) in the data sub-table E(stu_2).

Operation S803: Generate a second group of data sub-table query requests. The second group of data sub-table query requests are different from the first group of data sub-table query requests. As submitted in the foregoing, the first group of data sub-table query requests are configured to request querying a second group of data sub-tables in order to obtain the second attribute value matching the first attribute value in a first group of data sub-tables. The two parties of matching in the first group of data sub-table query requests are the second attribute value in the second group of data sub-tables and the first attribute value in the first group of data sub-tables. Thus, the second group of data sub-table query requests may be generated by changing either of the two parties of the matching in the first group of data sub-table query requests or changing both. Since each party of the matching includes several elements, e.g., table, attribute, attribute value, the changing may refer to changing any of the elements in either party or both parties of the matching. The second group of data sub-table query requests may, but are not limited to, include a data sub-table query request 3 and a data sub-table query request 4.

The second group of data sub-table query requests may, but are not limited to, include a data sub-table query request 3 and a data sub-table query request 4. The data sub-table query request 3 may, but is not limited to, be configured to request querying the data sub-table E(level_1) in order to obtain the attribute values of the attribute (e.g., grade) matching the attribute values of the first attribute (e.g., score) in the data sub-table E(stu_1). The data sub-table query request 4 may, but is not limited to, be configured to request querying the data sub-table E(child_2) in order to obtain the attribute values and the like of the second attribute (e.g., grade) matching the attribute values of the attribute (e.g., weight) in the data sub-table E(weight_1).

Operation S804: Transmit the first group of data sub-table query requests and the second group of data sub-table query requests to the server 104, and acquire a first group of query results corresponding to the first group of data sub-table query requests and a second group of query results corresponding to the second group of data sub-table query requests, the first group of query results and the second group of query results being transmitted back by the server.

By the above operations, the data table query request acquired at the client is converted into the first group of data sub-table query requests, and the second group of data sub-table query requests are generated. In one direction, when the client randomly transmits the first group of data sub-table query requests and the second group of data sub-table query requests to the server, transmission of the second group of data sub-table query requests may interfere with a transmission sequence of query requests in the first group of data sub-table query requests. In the other direction, the query results of the second group of data sub-table query requests may interfere with statistics collection on the frequency of the query results of the first group of data sub-table query requests. The returned second group of query results are unrelated to the first group of query results. In this method, statistical analysis performed by the frequency of appearance of ciphertext data in the query results of the first group of data sub-table query requests is obfuscated, thereby improving the security of data table query.

In some embodiments of the present disclosure, the terminal device may be a terminal device provided with a client, and may, but is not limited to, include at least one of the following: a mobile phone (e.g., an Android mobile phone, and an iOS mobile phone), a notebook computer, a tablet computer, a palmtop computer, a mobile Internet device (MID), a PAD, a desktop computer, a smart TV, and the like. The client may be a video client, an instant messaging client, a browser client, an education client, and the like. The network may, but is not limited to, include: a wired network and a wireless network, where the wired network includes: a local area network, a metropolitan area network, and a wide area network; and the wireless network includes Bluetooth, WIFI, and other networks implementing wireless communication. The server may be a single server, a server cluster including a plurality of servers, or a cloud server. The above is merely an example, and is not limited in any way in the embodiments of the present disclosure.

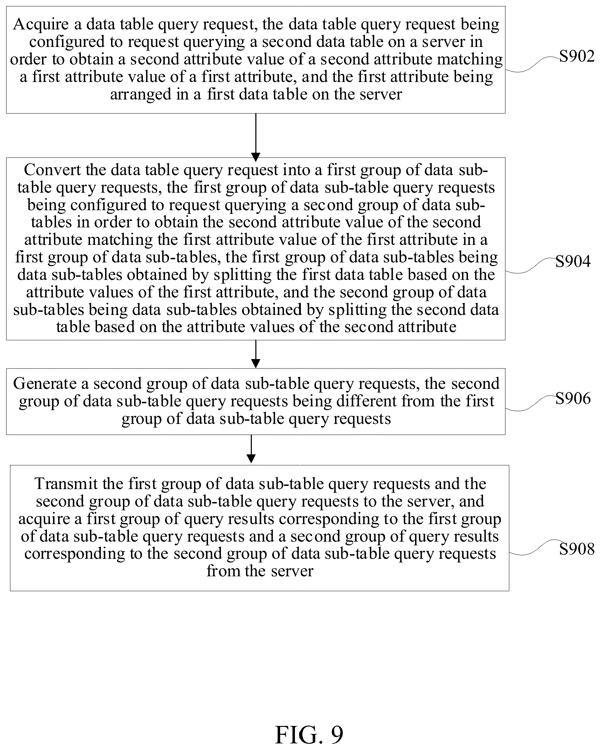

The method for querying a data table may be independently performed by one of the server 104 and the client 102, or may be jointly performed by at least two of the server 104 and the client 102. As an exemplary implementation, the client 102 performing the method for querying a data table in the embodiments of the present disclosure is taken as an example. FIG. 9 is a schematic flowchart of a method for querying a data table according to the embodiments of the present disclosure. As shown in FIG. 9, a process of the method for querying a data table may include the following operations:

Operation S902: Acquire a data table query request. The data table query request is configured to request querying a second data table on a server in order to obtain a second attribute value of a second attribute matching a first attribute value of a first attribute. The first attribute is an attribute arranged in a first data table on the server which is a first computer device.

In the case that a client acquires an unencrypted data table, to improve data security, data (e.g., attributes and table names) in the data table are usually encrypted. The encryption methods are explained in detail in the application scenario part of the embodiments of the present disclosure, and the descriptions thereof will be omitted herein. The encrypted data may, but is not limited to, be stored in a server. In a case that the data in the encrypted data table stored in the server needs to be accessed, the data may, but is not limited to, be accessed via unencrypted attributes and table name of the data table. Specifically, a data table query request may, but is not limited to, be acquired at the client. The data table query request may carry an unencrypted table name of the second data table and an unencrypted attribute name of the second attribute; and an unencrypted table name of the first data table and an unencrypted attribute name of the first attribute.

For example, the data table query request carries the unencrypted table name "stu" of the data table E(stu) (the first data table), and the unencrypted attribute "score" (the first attribute) in the data table E(stu); and the unencrypted table name "child" of the data table E(child) (the second data table), and the unencrypted attribute "grade" (the second attribute) in the data table E(child). In this method, leak of the table names and the attribute names in the encrypted data table is avoided, and the security of data in the data table is improved.

In some embodiments of the present disclosure, the attribute values of the second attribute matching the attribute values of the first attribute may, but is not limited to, be acquired by the following operations: acquire a first group of hash values of the one or more attribute values of the first attribute; acquire a second group of hash values of the one or more attribute values of the second attribute; search the second group of hash values one by one for a hash value same as a first hash value, where the first hash value is a hash value in the first group of hash values; and determine that the attribute values of a first attribute corresponding to the first hash value match the attribute values of a second attribute corresponding to the second hash value, in a case that a second hash value same as the first hash value is found in the second group of hash values.

Operation S904: Convert the data table query request into a first group of data sub-table query requests. The first group of data sub-table query requests are configured to request querying a second group of data sub-tables in order to obtain the second attribute value of the second attribute matching the first attribute value of the first attribute in a first group of data sub-tables. The first group of data sub-tables are data sub-tables obtained by splitting the first data table based on a plurality of attribute values of the first attribute, and the second group of data sub-tables are data sub-tables obtained by splitting the second data table based on a plurality of attribute values of the second attribute.

In the case that the client acquires a data table query request, the data table query request may, but is not limited to, be converted into a first group of data sub-table query requests. From a sub-table mapping table stored in the client, a first group of data sub-tables and the attributes of the data sub-tables in the first group of data sub-tables, corresponding to the name of the first data table and the first attribute that are carried in the data table query request, may, but are not limited to, be acquired; and a second group of data sub-tables and the attributes of the data sub-tables in the second group of data sub-tables, corresponding to the name of the second data table and the second attribute that are carried in the data table query request, are acquired. A first group of data sub-table query requests are generated by the first group of data sub-tables and the attributes of the data sub-tables in the first group of data sub-tables, and the second group of data sub-tables and the attributes of the data sub-tables in the second group of data sub-tables.

For example, the data table query request carries the unencrypted table name "stu" of the data table E(stu) (the first data table), and "scores" (the first attribute) in the data table E(stu); and the unencrypted table name "child" of the data table E(child) (the second data table), and "grades" (the second attribute) in the data table E(child). From the sub-table mapping table stored in the client, the encrypted table names (e.g. E(stu_1) and E(stu_2), where the data sub-tables E(stu_1) and E(stu_2) are in the first group of data sub-tables) of the data sub-tables corresponding to the unencrypted table name "stu" of the data table E(stu), as well as the encrypted attributes, which may, but are not limited to, be the E(score_1) and E(score_2) respectively, in the data sub-tables corresponding to the "scores" in the data table E(stu), may, but are not limited to, be acquired. The encrypted table names (e.g. E(child_1) and E(child_2), where the data sub-tables E(child_1) and E(child_2) are in the second group of data sub-tables) of the data sub-tables corresponding to the unencrypted table name "child" of the data table E(child), as well as the encrypted attributes, which may, but are not limited to, be the E(grade_1) and E(grade_2) respectively, in the data sub-tables corresponding to the "grades" in the data table E(child), may, but are not limited to, be acquired.

The first group of data sub-table query requests carry the encrypted table names of the first group of data sub-tables and the encrypted attributes in the data sub-tables in the first group of data sub-tables. Namely, E(stu_1) and E(stu_2), E(score_1) and E(score_2), E(child_1) and E(child_2), and E(grade_1) and E(grade_2) are all encrypted.

Accordingly, the data table query request carrying the unencrypted table names and attributes is converted into a group of data sub-table query requests carrying the encrypted data sub-table names and data sub-table attributes, thereby avoiding leak of the table names and attributes of the encrypted data table that may be caused when the data table is accessed, and improving the security of data access in the data table. In addition, by querying in split tables, a plurality of data sub-tables may be queried in parallel, thereby reducing the time required for querying, and improving the query efficiency.

Operation S906: Generate a second group of data sub-table query requests, where the second group of data sub-table query requests are different from the first group of data sub-table query requests.

In a case that the data table query request is converted into the first group of data sub-table query requests, a second group of data sub-table query requests may, but are not limited to, be generated. The second group of data sub-table query requests are different from the first group of data sub-table query requests. The second group of data sub-table query requests are configured for interfering with statistics collection on the frequency of the first group of data sub-table query requests (e.g., statistics on the query sequence, statistics on the number of query times, and statistics on the query frequency).

A passive persistent adversary may observe all encrypted access on the server, but does not actively perform his own access. By generating the second group of data sub-table query requests different from the first group of data sub-table query requests, statistics collection performed the passive persistent adversary on the query frequency of the data sub-tables in the first group of data sub-table query requests may be obfuscated. For example, when the passive persistent adversary attacks by using the data access frequency in a data sub-table join, the frequencies of appearance of deterministic ciphertext data a, b, and c in a data table A are the same, $N(a)=N(b)=N(c)$, and in a join process, the frequencies of performing a sub-table join on the table A and a table A' are also the same, $N(a, a')=N(b, b')=N(c, c')$, where c' is ciphertext data close to a value range of an attribute of the deterministic ciphertext data c. In this method, the passive persistent adversary is prevented from speculating encrypted data sub-tables belonging to the same data table, and further speculating a letter or a letter combination with the highest frequency of appearance in the encrypted data sub-tables, thereby speculating a key used in an encryption algorithm, and causing data leak. Therefore, the security in accessing a data table is improved.

Operation S908: Transmit the first group of data sub-table query requests and the second group of data sub-table query requests to the server, and acquire a first group of query results corresponding to the first group of data sub-table query requests and a second group of query results corresponding to the second group of data sub-table query requests, the first group of query results and the second group of query results being transmitted back by the server.

In some embodiments of the present disclosure, in a case that the data table query request is converted into the first group of data sub-table query requests, and the second group of data sub-table query requests are generated, the first group of data sub-table query requests and the second group of data sub-table query requests may, but are not limited to, be transmitted to the server, and a first group of query results corresponding to the first group of data sub-table query requests and a second group of query results corresponding to the second group of data sub-table query requests may be acquired, where the first group of query results and the second group of query results are transmitted back by the server. The second group of query results are configured for interfering with statistics collection on the frequency of the first group of query results.

For example, in a case that a preset passive persistent adversary already knows a first attribute (e.g., scores) and a second attribute (e.g., grades) for matching, a data sub-table and a data sub-table attribute that are accessed in the server are encrypted, and distribution of the attribute values of scores and grades conforms to a normal distribution. For example, in the attribute values of scores, 60 to 90 appear many times, and in the attribute values of grades, "good" and "pass" appear many times. When the method for querying a data table in some embodiments of the present disclosure is not used, and a deterministic encryption algorithm is used, the passive persistent adversary may determine the same data that appears many times in the query results transmitted back by the server as "good" and "pass", and analyze a key used by "good" and "pass", causing leak of plaintext data. According to the method for querying a data table in some embodiments of the present disclosure, the server returns the first group of query results and the second group of query results. In this case, the distribution of "scores" and "grades" in the first group of query results may no longer conform to a normal distribution, and interferes with statistics collection performed by the passive persistent adversary on the frequency of the first group of query results, thereby improving the security of the query results returned by the server.

Accordingly, the data table query request acquired at the client is converted into the first group of data sub-table query requests, and the second group of data sub-table query requests are generated. When the client randomly transmits the first group of data sub-table query requests and the second group of data sub-table query requests to the server, transmission of the second group of data sub-table query requests may interfere with a transmission sequence of query requests in the first group of data sub-table query requests. Further, the query results of the second group of data sub-table query requests may interfere with statistics collection on the frequency of the query results of the first group of data sub-table query requests. The returned second group of query results are unrelated to the first group of query results. In this method, statistical analysis performed by the frequency of appearance of ciphertext data in the query results of the first group of data sub-table query requests is obfuscated, thereby improving the security of data table query.

In the embodiments, the generating a second group of data sub-table query requests includes:

S11: Generate the second group of data sub-table query requests, the second group of data sub-table query requests being configured to request querying the second group of data sub-tables in order to obtain the second attribute value of the second attribute matching a third attribute value of a third attribute in a third group of data sub-tables, and the third group of data sub-tables being data sub-tables obtained by splitting a third data table on the server based on a plurality of attribute values of the third attribute; and/or

S12: Generate the second group of data sub-table query requests, the second group of data sub-table query requests being configured to request querying a fourth group of data sub-tables in order to obtain a fourth attribute value of a fourth attribute matching the first attribute value of the first attribute in the first group of data sub-tables, and the fourth group of data sub-tables being data sub-tables obtained by splitting a fourth data table on the server based on a plurality of attribute values of the fourth attribute; and/or

S13: Generate the second group of data sub-table query requests, the second group of data sub-table query requests being configured to request querying the fourth group of data sub-tables in order to obtain the fourth attribute value of the fourth attribute matching the third attribute value of the third attribute in the third group of data sub-tables.

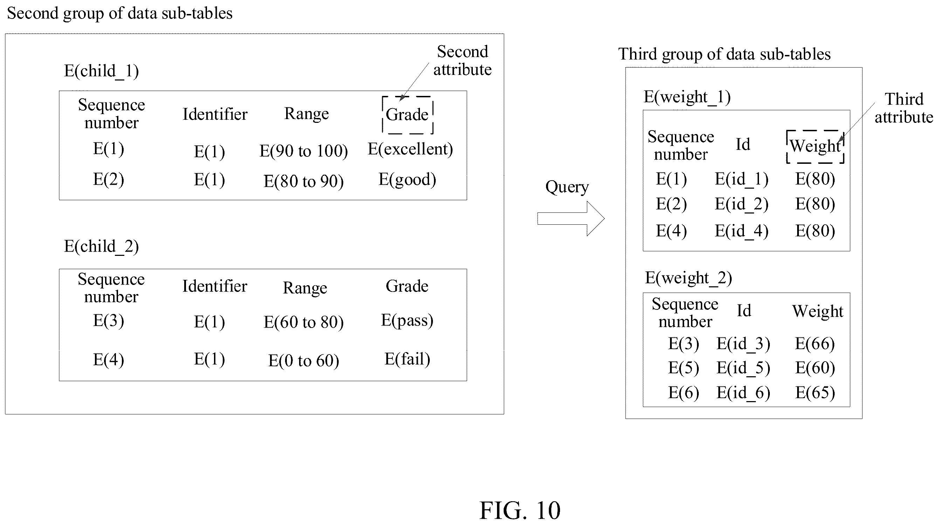

To obfuscate the access mode of the data sub-tables, the second group of data sub-table query requests may, but are not limited to, be generated. In some embodiments of the present disclosure, as shown in FIG. 10, the second group of data sub-table query requests are configured to request querying the second group of data sub-tables (which may, but are not limited to, include the data sub-tables E(child_1) and E(child_2)) in order to obtain the attribute values of a second attribute (e.g., grade) matching the attribute values of a third attribute (e.g., weight) in a third group of data sub-tables (which may, but are not limited to, include the data sub-tables E(weight_1) and E(weight_2)). The third group of data sub-tables are data sub-tables obtained by splitting a third data table (e.g., the data table E(weight)) on the server based on the plurality of attribute values of the third attribute (e.g., weight).

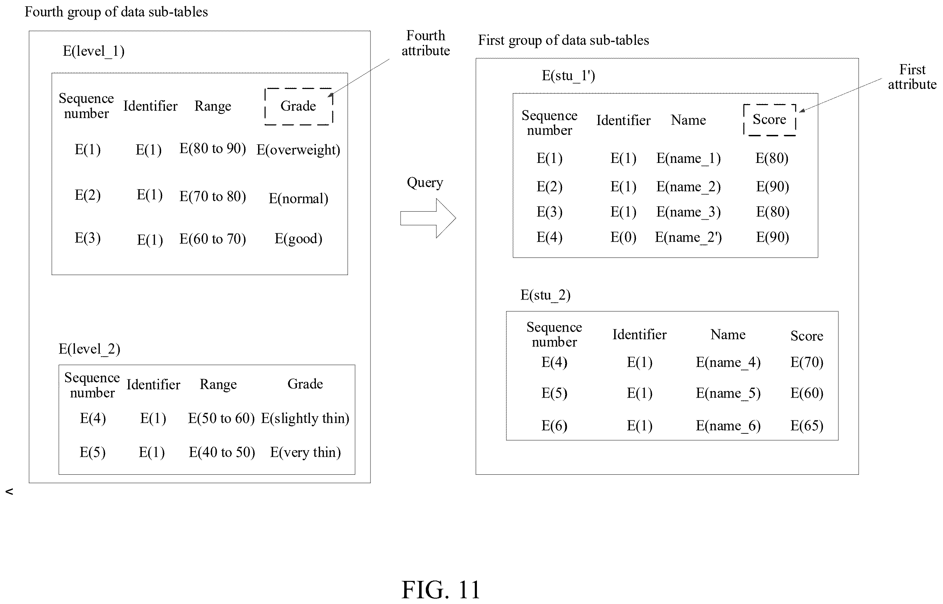

In some embodiments of the present disclosure, as shown in FIG. 11, the second group of data sub-table query requests are configured to request querying a fourth group of data sub-tables (which may, but are not limited to, include the data sub-tables E(level_1) and E(level_2)) in order to obtain the attribute values of a fourth attribute (e.g., grade) matching the attribute values of a first attribute (e.g., score) in the first group of data sub-tables (which may, but are not limited to, include the data sub-tables E(stu_1') and E(stu_2)). The fourth group of data sub-tables (which may, but are not limited to, include the data sub-tables E(level_1) and E(level_2)) are data sub-tables obtained by splitting a fourth data table (e.g., the data table E(level)) on the server based on the plurality of attribute values of the fourth attribute (e.g., grade).

In some embodiments of the present disclosure, the second group of data sub-table query requests may also be configured to request querying a fourth group of data sub-tables (which may, but are not limited to, include the data sub-tables E(level_1) and E(level_2)) in order to obtain the attribute values of a fourth attribute (e.g., grade) matching the attribute values of a third attribute (e.g., weight) in the third group of data sub-tables (which may, but are not limited to, include the data sub-tables E(weight_1) and E(weight_2)).

By the above operations, the second group of data sub-table query requests may be configured for interfering with statistical analysis on the query sequence, the query frequency, and the like of the data in the data sub-tables queried by the first group of data sub-table query requests. For example, the first group of data sub-table query requests include (a1, b1), (a1, b2), and (a1, b3), where (a1, b1) represents querying, in the attribute values of attributes in a data sub-table b1, for an attribute value matching the attribute value of an attribute in a data sub-table a1; (a1, b2) represents querying, in the attribute values of attributes in a data sub-table b2, for an attribute value matching the attribute value of an attribute in the data sub-table a1; and (a1, b3) represents querying, in the attribute values of attributes in a data sub-table b3, for an attribute value matching the attribute value of an attribute in the data sub-table a1.

To ensure randomness of query of the data sub-table a1, a data sub-table c1 that is close to a value range of an attribute in the really queried data sub-table a1 may be randomly selected, so that when (a1, b1), (a1, b2), and (a1, b3) sub-table join query is performed, the data sub-table a1 or the data sub-table c1 is selected at a probability of 1/2 each time. Similarly, to ensure randomness of the data sub-table b1, a data sub-table d1 that is close to a value range of an attribute in the really queried data sub-table b1 may be randomly selected, so that when (a1, b1) sub-table join query is performed, the data sub-table b1 or the data sub-table d1 is selected at a probability of 1/2 each time. Randomness of query of the data sub-table b2 and the data sub-table b3 may be ensured in the same manner, and the descriptions thereof are omitted herein. In this method, the access frequency of the data sub-table a1 is obfuscated, thereby preventing the adversary from speculating which data sub-tables belong to the same data table based on the access frequency information of the data sub-tables. Therefore, statistics collection performed by the passive persistent adversary on the frequency of the first group of data sub-table query request is interfered, and the security in transmitting the query requests to the server is improved.

A large number of second group of data sub-table query requests may be allowed to be generated. Considering the actual processing performance of the server and the client, in a case that the number of the second group of data sub-table query requests is less than or equal to a number threshold, the number of the generated second group of data sub-table query requests may not be limited. In a case that the number of the second group of data sub-table query requests is greater than the number threshold, the data sub-table query requests of which the number is less than or equal to the number threshold are randomly acquired from all the generated second group of data sub-table query requests. In this method, the performance utilization of the client and the server is improved.

In the embodiments, the method further includes:

S21: Search a client which is a second computer device for an identifier of a data table meeting a first matching condition with the first data table, to obtain the identifier of the third data table, and acquire the identifiers of the third group of data sub-tables having a mapping relationship with the third data table from the client, the first matching condition including that a third value range is at least partially the same as a first value range, the first value range being a value range of the attribute values of the first attribute in the first data table, and the third value range being a value range of the attribute values of the third attribute in the third data table; and/or

S22: Search the client for identifiers of data sub-tables meeting a second matching condition with the data sub-tables of the first group of data sub-tables, to obtain the identifiers of the third group of data sub-tables, the second matching condition including that a third value subrange is at least partially the same as a first value subrange, the first value subrange being a value range of the attribute values of the first attribute in the data sub-tables of the first group of data sub-tables, and the third value subrange being a value range of the attribute values of the third attribute in the data sub-tables of the third group of data sub-tables.

To increase the similarity between data in the third data table and data in the first data table, the identifier (which may, but is not limited to, include an identifier such as a table name or a code of the data table) of a data table that meets a first matching condition with the first data table, may, but is not limited to, be searched in the distribution information stored in the client, and the identifiers (which may, but are not limited to, include identifiers such as table names or codes of the data sub-tables) of a third group of data sub-tables having a mapping relationship with the third data table, may be acquired from the client.

For example, the client is searched for an identifier of a data table meeting a first matching condition with the first data table (e.g., the data table E(stu)), to obtain the identifier of the third data table (e.g., the data table E(weight)), and the identifiers of the third group of data sub-tables (e.g., the data table E(weight_1) and the data table E(weight_2)) having a mapping relationship with the third data table (e.g., the data table E(weight)) are acquired from the client.

The value range of the attribute values of the third attribute (e.g., weight) in the third data table (e.g., the data table E(weight)) being at least partially the same as the value range of the attribute values of the first attribute (e.g., score) in the first data table (e.g., the data table E(stu)), may refer to that, at least one attribute value of the third attribute (e.g., weight) in the third data table (e.g., the data table E(weight)) is the same as the attribute value of the first attribute (e.g., score) in the first data table (e.g., the data table E(stu)), and the frequency of appearance of the same attribute value in the third data table is different from the frequency of appearance of the same attribute value in the first data table. In this method, the similarity between the data in the third data table and the data in the first data table is increased. On the premise that a preset adversary knows two attributes for join, the first data table cannot be distinguished from the third data table. Further, plaintext data in the encrypted data cannot be decrypted, and the probability of data leak is reduced.

In the embodiments, the method further includes:

S31: The first matching condition further includes: a first number of times is different from a third number of times, the first number of times being the number of times that a first value appears in the first attribute in the first data table, the third number of times being the number of times that the first value appears in the third attribute in the third data table, and the first value being a value same in the third value range and the first value range; and/or a first proportion is different from a third proportion, the first proportion being a proportion that the first value appears in the first attribute in the first data table, the third proportion being a proportion that the first value appears in the third attribute in the third data table, the first proportion being a proportion obtained by dividing the first number of times by a first total number of times, the first total number of times being a sum of the numbers of times that the values in the first value range appear in the first attribute in the first data table, the third proportion being a proportion obtained by dividing the third number of times by a third total number of times, and the third total number of times being a sum of the numbers of times that the values in the third value range appear in the third attribute in the third data table; and/or

S32: The second matching condition further includes: a first sub-number of times is different from a third sub-number of times, the first sub-number of times being the number of times that a third value appears in the first attribute in one data sub-table of the first group of data sub-tables, the third sub-number of times being the number of times that the third value appears in the third attribute in another data sub-table of the third group of data sub-tables, and the third value being a value same in the third value subrange and the first value subrange; and/or a first sub-proportion is different from a third sub-proportion, the first sub-proportion being a proportion that the third value appears in the first attribute in one data sub-table of the first group of data sub-tables, the third sub-proportion being a proportion that the third value appears in the third attribute in the another data sub-table of the third group of data sub-tables, the first sub-proportion being a proportion obtained by dividing the first sub-number of times by a first sub-table total number of times, the first sub-table total number of times being a sum of the numbers of times that the values in the first value sub-range appear in the first attribute in the one data sub-table, the third sub-proportion being a proportion obtained by dividing the third sub-number of times by a third sub-table total number of times, and the third sub-table total number of times being a sum of the numbers of times that the values in the third value range appear in the third attribute in the other data sub-table.

In some embodiments of the present disclosure, before the searching the client for the identifier of the third data table meeting the first matching condition with the first data table, the method further includes: acquire a value range of the attribute values of the first attribute in the first data table, the identifier of the first data table and the identifiers of the first group of data sub-tables, that are transmitted back by the server, from the client, where the first data table and the first group of data sub-tables have a mapping relationship; and a value range of the attribute values of the third attribute in the third data table, the identifier of the third data table and the identifiers of the third group of data sub-tables, that are transmitted back by the server, are acquired from the client, where the third data table and the third group of data sub-tables have a mapping relationship.

Alternatively, before the searching the client for the identifiers of the third group of data sub-tables meeting the second matching condition with the first group of data sub-tables, the method further includes: acquire a value range of the attribute values of the first attribute in the first group of data sub-tables, the identifier of the first data table and the identifiers of the first group of data sub-tables, that are transmitted back by the server, from the client, where the first data table and the first group of data sub-tables have a mapping relationship; and a value range of the attribute values of the third attribute in the third group of data sub-tables, the identifier of the third data table and the identifiers of the third group of data sub-tables, that are transmitted back by the server, are acquired from the client, where the third data table and the third group of data sub-tables have a mapping relationship.

To better understand the method for querying a data table in the embodiments of the present disclosure, explanations and descriptions for the first matching condition and the second matching condition in the embodiments of the present disclosure are provided below with reference to some embodiments, and may, but are not limited to, be applicable to the embodiments of the present disclosure.

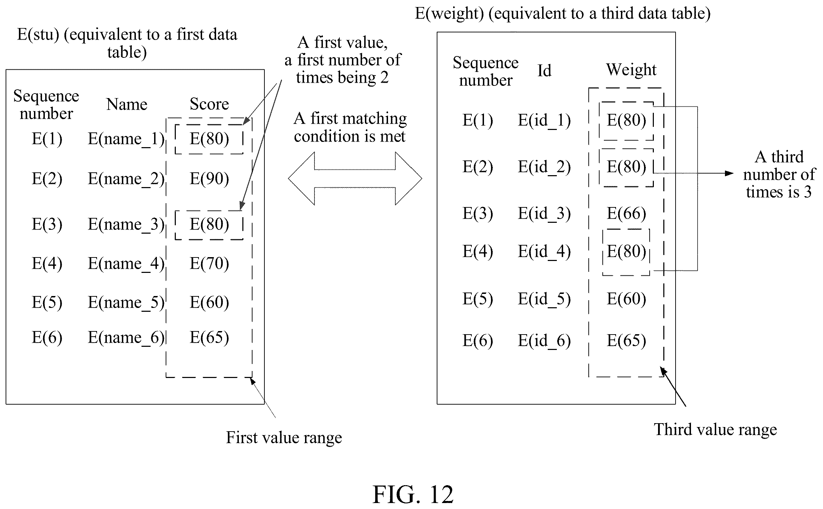

As shown in FIG. 12, the first matching condition further includes: a first number of times is different from a third number of times. The first number of times (e.g., 2) is the number of times that a first value (e.g., 80) appears in the first attribute (e.g., score) in the first data table (e.g., the data table E(stu)). The third number of times (e.g., 3) is the number of times that the first value (e.g., 80) appears in the third attribute (e.g., weight) in the third data table (e.g., the data table E(weight)). The first value (e.g., 80) is a value same in the third value range and the first value range.

The second matching condition further includes: a first sub-number of times is different from a third sub-number of times. The first sub-number of times is the number of times that a third value appears in the first attribute in one data sub-table of the first group of data sub-tables. The third sub-number of times is the number of times that the third value appears in the third attribute in another data sub-table of the third group of data sub-tables. The third value is a value same in the third value subrange and the first value subrange.

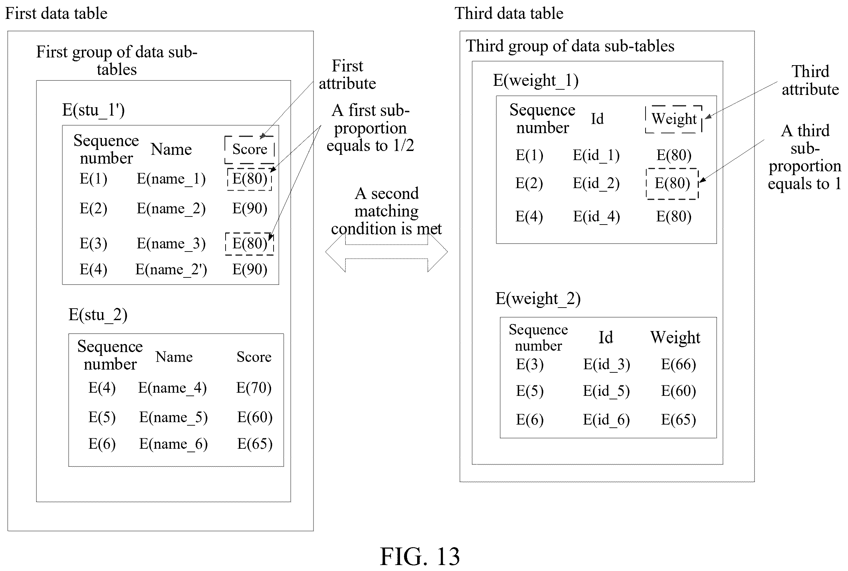

Alternatively, as shown in FIG. 13, the second matching condition further includes: a first sub-proportion is different from a third sub-proportion. The first sub-proportion is a proportion (e.g., 1/2) obtained by dividing the first sub-number of times (e.g., the number of times, 2, that the score 80 appears in the data sub-table E(stu_1')) by a first sub-table total number of times (e.g., the number of times, 4, that the scores of all values appear in the data sub-table E(stu_1')), the first sub-table total number of times is a sum of the numbers of times that the values in the first value sub-range appear in the first attribute (e.g., score) in the data sub-table (e.g., the data table E(stu_1')), and the third sub-proportion is a proportion (e.g., 1) obtained by dividing the third sub-number of times (e.g., the number of times, 3, that the weight 80 appears in the data sub-table E(weight_1)) by a third sub-table total number of times (e.g., the number of times, 3, that the weights of all values appear in the data sub-table E(weight_1)).

In this method, the data in a data table meeting the first matching condition or the second matching condition and the data in a data table that is really expected to be queried have a similarity in frequency, thereby interfering with statistics collection performed by the passive persistent adversary on the query frequency (e.g., the number of query times, the query sequence, and the query frequency) of the data table or data sub-tables requested to be queried by the first group of data sub-table query requests, for example, when the adversary analyzes which data sub-tables belong to an original data table by collecting statistics based on the query frequencies of the data sub-tables. For the data table stu, the data sub-tables thereof include E(stu_1') and E(stu_2), and the number of query times performed on the data table E(stu_1') is $sum(stu\_1')=N(stu\_1')+\kappa 1$, where $N(stu\_1")$ is the number of real query times that are to be performed, and $\kappa 1$ is a noise introduced, so that the query frequency of the E(stu_1') is fuzzy. The number of query times performed on the data table E(child_1) is $sum(child\_1)=N(child\_1)+\kappa 1'$, where N(child_1) is the number of real query times that are to be performed, and $\kappa 1'$ is a noise introduced, so that the query frequency of the E(child_1) is fuzzy.

In addition, for a fixed sequence of a data sub-table join extended from an original data table join, for example, in the attribute values of attributes in a data table C, in a case that an attribute value matching an attribute value of an attribute of a data table A is queried, the total number of query times is $Sum=\{N(A1, C1)+N(A2, C1)+N(A2, C2)+\kappa\}$, where the data table A includes a data sub-table A1 and a data sub-table A2, and the data table C includes a data sub-table C1 and a data sub-table C2. A noise k has been introduced to the sub-table join sequences of the data table C and the data table A, and k is random, so that it is difficult for the adversary to determine the size of an original sequence, to speculate the data sub-tables included in the original table. The access frequency of each data sub-table is randomized by the introduced noise, and the data is protected from statistical analysis attack.

In the embodiments, the method further includes:

S41: Search a client which is a second computer device for an identifier of a data table meeting a third matching condition with the second data table, to obtain the identifier of the fourth data table, and acquire the identifiers of the fourth group of data sub-tables having a mapping relationship with the fourth data table from the client, where the third matching condition includes that a fourth value range is at least partially the same as a second value range, the second value range is a value range of the attribute values of the second attribute in the second data table, and the fourth value range is a value range of the attribute values of the fourth attribute in the fourth data table; and/or

S42: Search the client for identifiers of data sub-tables meeting a fourth matching condition with the data sub-tables of the second group of data sub-tables, to obtain the identifiers of the fourth group of data sub-tables, where the fourth matching condition includes that a fourth value subrange is at least partially the same as a second value subrange, the second value subrange includes a value range of the attribute values of the second attribute in the data sub-tables of the second group of data sub-tables, and the fourth value subrange includes a value range of the attribute values of the fourth attribute in the data sub-tables of the fourth group of data sub-tables.

To increase the similarity between data in the fourth data table and data in the second data table, the identifier (which may, but is not limited to, include an identifier such as a table name or a code of the data table) of a data table that meets a third matching condition with the second data table, may, but is not limited to, be searched in the distribution information stored in the client, to obtain the identifier of the fourth data table, and the identifiers (which may, but are not limited to, include identifiers such as table names or codes of the data sub-tables) of a fourth group of data sub-tables having a mapping relationship with the fourth data table, may be acquired from the distribution information stored in the client.

For example, the identifier of a data table that meets a third matching condition with the second data table (e.g., the data table E(child)), is searched in the distribution information stored in the client, to obtain the identifier of the fourth data table (e.g., the data table E(level)), and the identifiers of a fourth group of data sub-tables (e.g., the data sub-table E(level_1) and the data sub-table E(level_2)) having a mapping relationship with the fourth data table (e.g., the data table E(level)), are acquired from the distribution information stored in the client.

The value range of the attribute values of the fourth attribute (e.g., grade) in the fourth data table (e.g., the data table E(level)) being at least partially the same as the value range of the attribute values of the first attribute (e.g., grade) in the second data table (e.g., the data table E(child)), may refer to that, at least one attribute value of the fourth attribute (e.g., grade) in the fourth data table

(e.g., the data table E(level)) is the same as the attribute value of the first attribute (e.g., grade) in the second data table (e.g., the data table E(child)), and the frequency of appearance of the same attribute value in the fourth data table is different from the frequency of appearance of the same attribute value in the second data table.

In this method, the similarity between the data in the fourth data table and the data in the second data table is increased. On the premise that the preset adversary knows two attributes for join, the second data table cannot be distinguished from the fourth data table. Further, plaintext data in the encrypted data cannot be decrypted, and the security of the encrypted data stored in the server is improved.

In the embodiments, the method further includes:

S51: The third matching condition further includes: a second number of times is different from a fourth number of times, the second number of times being the number of times that a second value appears in the second attribute in the second data table, the fourth number of times being the number of times that the second value appears in the fourth attribute in the fourth data table, and the second value being a value same in the fourth value range and the second value range; and/ or a second proportion is different from a fourth proportion, the second proportion being a proportion that the second value appears in the second attribute in the second data table, the fourth proportion being a proportion that the second value appears in the fourth attribute in the fourth data table, the second proportion being a proportion obtained by dividing the second number of times by a second total number of times, the second total number of times being a sum of the numbers of times that the values in the second value range appear in the second attribute in the second data table, the fourth proportion being a proportion obtained by dividing the fourth number of times by a fourth total number of times, and the fourth total number of times being a sum of the numbers of times that the values in the fourth value range appear in the fourth attribute in the fourth data table; and/or

S52: The fourth matching condition further includes: a second sub-number of times is different from a fourth sub-number of times, the second sub-number of times being the number of times that a fourth value appears in the second attribute in one data sub-table of the second group of data sub-tables, the fourth sub-number of times being the number of times that the fourth value appears in the fourth attribute in another data sub-table of the fourth group of data sub-tables, and the fourth value being a value same in the fourth value subrange and the second value subrange; and/or a second sub-proportion is different from a fourth sub-proportion, the second sub-proportion being a proportion that the fourth value appears in the second attribute in the one data sub-table, the fourth sub-proportion being a proportion that the fourth value appears in the fourth attribute in the another data sub-table, the second sub-proportion being a proportion obtained by dividing the second sub-number of times by a second sub-table total number of times, the second sub-table total number of times being a sum of the numbers of times that the values in the second value sub-range appear in the second attribute in the one data sub-table, the fourth sub-proportion being a proportion obtained by dividing the fourth sub-number of times by a fourth sub-table total number of times, and the fourth sub-table total number of times being a sum of the numbers of times that the values in the fourth value range appear in the fourth attribute in the other data sub-table.

To better understand the method for querying a data table in the embodiments of the present disclosure, explanations and descriptions for the third matching condition and the fourth matching condition in the embodiments of the present disclosure are provided below with reference to certain embodiments, and may, but are not limited to, be applicable to the embodiments of the present disclosure.

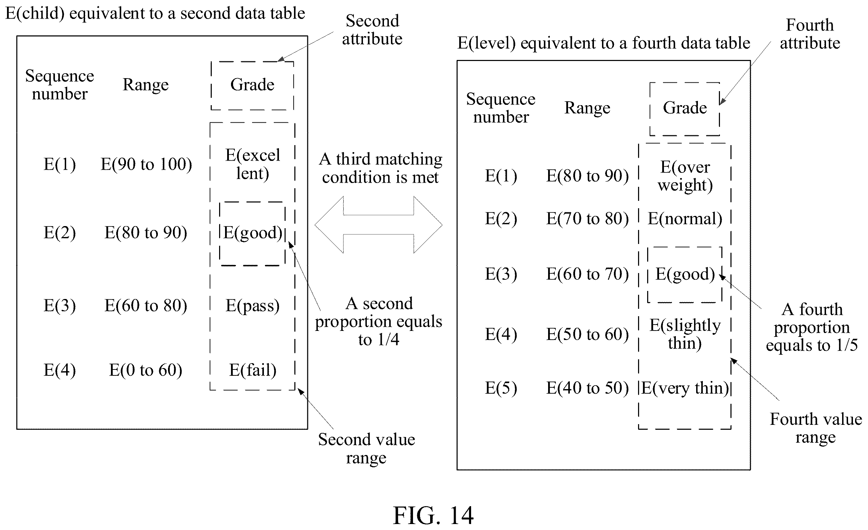

As shown in FIG. 14, the third matching condition further includes: a second proportion (e.g., the proportion, 1/4, of the grade "good" appear in the data table E(child)) is different from a fourth proportion (e.g., the proportion, 1/5, of the grade "good" appear in the data table E(level)). The second proportion is a proportion obtained by dividing the second number of times (e.g., the number of times, 1, that the grade "good" appears in the data table E(child)) by a second total number of times (e.g., a sum of the numbers of times, 4, that all values of the attribute "grade" appear in the data table E(child)). The second total number of times is a sum of the numbers of times that the values in the second value range appear in the second attribute (e.g., grade) in the second data table (e.g., the data table E(child)). The fourth proportion is a proportion obtained by dividing the fourth number of times (e.g., the number of times, 1, that the grade "good" appears in the data table E(level)) by a fourth total number of times (e.g., a sum of the numbers of times, 5, that all values of the attribute "grade" appear in the data table (level)). The fourth total number of times is a sum of the numbers of times that the values in the fourth value range appear in the fourth attribute (e.g., grade) in the fourth data table (e.g., the data table E(level)).

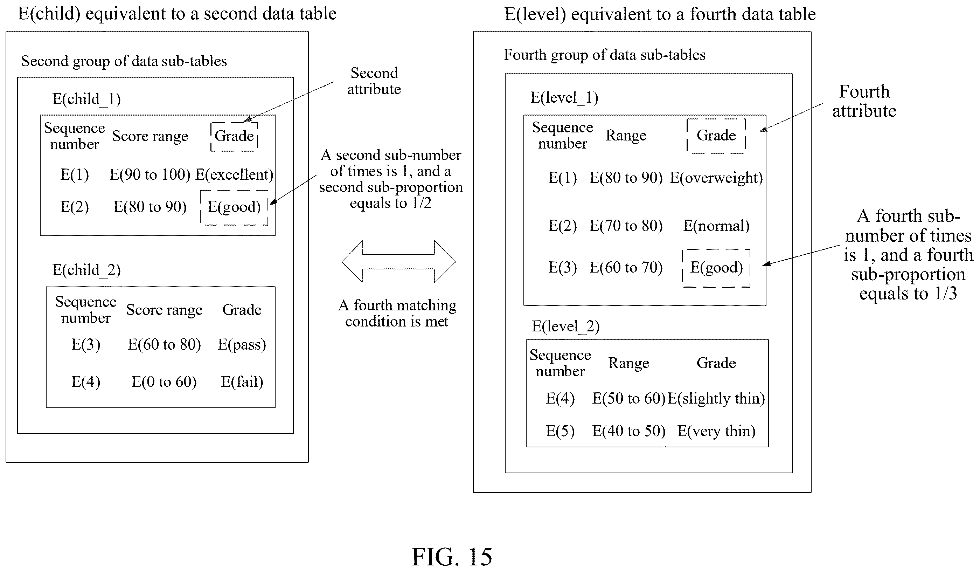

Alternatively, as shown in FIG. 15, the fourth matching condition further includes: a second sub-proportion (e.g., 1/2) is different from a fourth sub-proportion (e.g., 1/3). The second sub-proportion is a proportion obtained by dividing the second sub-number of times (e.g., the number of times, 1, that the grade "good" appears in the data sub-table E(child_1)) by a second sub-table total number of times (e.g., a sum of the numbers of times, 2, that all values of the attribute "grade" appear in the data sub-table E(child_1)). The second sub-table total number of times is a sum of the numbers of times that the values in the second value subrange appear in the second attribute in a second data sub-table. The fourth sub-proportion is a proportion obtained by dividing the fourth sub-number of times (e.g., the number of times, 1, that the grade "good" appears in the data sub-table E(level_1)) by a fourth sub-table total number of times (e.g., a sum of the numbers of times, 3, that all values of the attribute "grade" appear in the data sub-table E(level_1)).

In this method, the similarity between the data in the fourth data table and the data in the second data table is increased (e.g., the numbers of times or the proportions the same values appear are the same, or in the same value range). On the premise that the preset adversary knows two attributes for join, the second data table cannot be distinguished from the fourth data table, and the difficulty in decrypting plaintext data in encrypted data is greatly increased for the adversary.

In the embodiments, the method further includes:

S61: In a case that the second group of data sub-table query requests are configured to request querying the second group of data sub-tables in order to obtain the second attribute value of the second attribute matching the third attribute value of the third attribute in the third group of data sub-tables, the first group of query results include first encrypted data of the first attribute value of the first attribute in the first group of data sub-tables and second encrypted data, queried from the second group of data sub-tables, of the second attribute value of the second attribute matching the first attribute value of the first attribute in the first group of data sub-tables, and the second group of query results include third encrypted data of the third attribute value of the third attribute in the third group of data sub-tables and second encrypted data, queried from the second group of data sub-tables, of the second attribute value of the second attribute matching the third attribute value of the third attribute in the third group of data sub-tables; and/or

S62: In a case that the second group of data sub-table query requests are configured to request querying the fourth group of data sub-tables in order to obtain the fourth attribute value of the fourth attribute matching the first attribute value of the first attribute in the first group of data sub-tables, the first group of query results include the encrypted data of the first attribute value of the first attribute in the first group of data sub-tables and the second encrypted data, queried from the second group of data sub-tables, of the second attribute value of the second attribute matching the first attribute value of the first attribute in the first group of data sub-tables, and the second group of query results include the first encrypted data of the first attribute value of the first attribute in the first group of data sub-tables and fourth encrypted data, queried from the fourth group of data sub-tables, of the fourth attribute value of the fourth attribute matching the first attribute value of the first attribute in the first group of data sub-tables; and/or

S63: In a case that the second group of data sub-table query requests are configured to request querying the fourth group of data sub-tables in order to obtain the fourth attribute value of the fourth attribute matching the third attribute value of the third attribute in the third group of data sub-tables, the first group of query results include the encrypted data of the first attribute value of the first attribute in the first group of data sub-tables and the encrypted data, queried from the second group of data sub-tables, of the second attribute value of the second attribute matching the first attribute value of the first attribute in the first group of data sub-tables, and the second group of query results include the third encrypted data of the third attribute value of the third attribute in the third group of data sub-tables and the fourth encrypted data, queried from the fourth group of data sub-tables, of the attribute values of the fourth attribute matching the third attribute value of the third attribute in the third group of data sub-tables.

In some embodiments of the present disclosure, in a case that the first group of query results corresponding to the first group of data sub-table query requests and the second group of query results corresponding to the second group of data sub-table query requests, transmitted back by the server, are acquired, based on request identifiers carried in the first group of query results and the second group of query results, query results having a first request identifier may, but are not limited to, be acquired from the query results returned by the server as the first group of query results, and query results having a second request identifier may, but are not limited to, be acquired from the query results returned by the server as the second group of query results, and the second group of query results are deleted. The first request identifier is a request identifier corresponding to the first group of data sub-table query requests. The second request identifier is a request identifier corresponding to the second group of data sub-table query requests.

A first request identifier may, but is not limited to, be generated for each query request in the first group of data sub-table query requests, and the generated first request identifier is carried in the first group of data sub-table query requests. A second request identifier may, but is not limited to, be generated for each query request in the second group of data sub-table query requests, and the generated second request identifier is carried in the second group of data sub-table query requests.

To better understand the first group of query results and the second group of query results in some embodiments of the present disclosure, explanations and descriptions thereof are provided below with reference to certain embodiments.

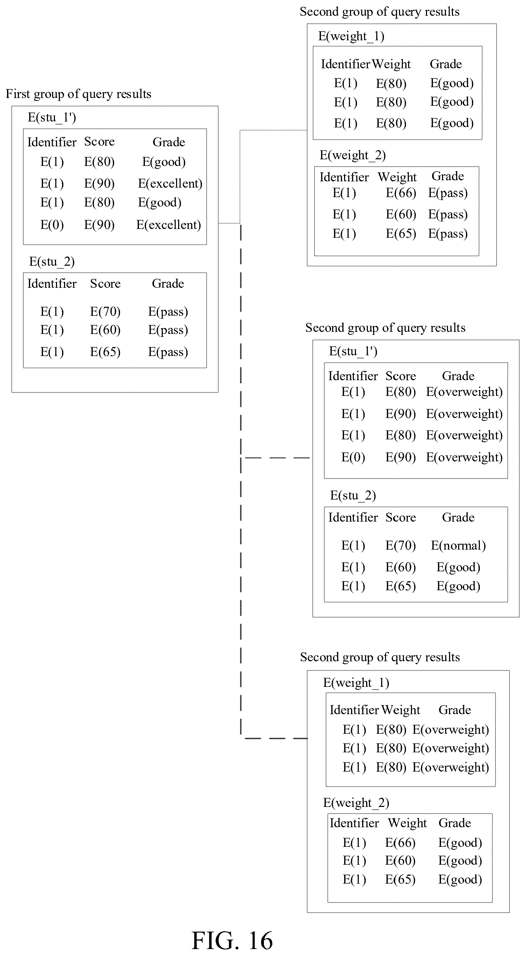

As shown in FIG. 16, in a case that the second group of data sub-table query requests are configured to request querying the second group of data sub-tables (e.g., the data sub-table E(child_1) and data sub-table E(child_2)) in order to obtain the attribute values of the second attribute (e.g., grade) matching the attribute values of the third attribute (e.g., weight) in the third group of data sub-tables (e.g., the data sub-table E(weight_1) and data sub-table E(weight_1)), the first group of query results include encrypted data of the attribute values of the first attribute (e.g., score) in the first group of data sub-tables (e.g., the data sub-table E(stu_1') and data sub-table E(stu_2)) and encrypted data, queried from the second group of data sub-tables (e.g., the data sub-table E(child_1) and data sub-table E(child_2)), of the attribute values of the second attribute (e.g., grade) matching the attribute values of the first attribute (e.g., score) in the first group of data sub-tables (e.g., the data sub-table E(stu_1') and data sub-table E(stu_2)), and the second group of query results include encrypted data of the attribute values of the third attribute in the third group of data sub-tables (e.g., the data sub-table E(weight_1) and data sub-table E(weight_2)) and encrypted data, queried from the second group of data sub-tables, of the attribute values of the second attribute (e.g., grade) matching the attribute values of the third attribute (e.g., weight) in the third group of data sub-tables.

Specifically, the first group of query results include the grades, corresponding to the scores in the data sub-table E(stu_1') and the data sub-table E(stu_2), in the data sub-table E(child_1) and the data sub-table E(child_2), and an identifier (E(1), E(0), or the like) of the data. For example, in the data sub-table E(stu_1'), the grade corresponding to the score 80 is "good", and the grade corresponding to the score 90 is "excellent". In the data sub-table E(stu_2), the grade corresponding to the score 70 is "pass", the grade corresponding to the score 60 is "pass", and the grade corresponding to the score 65 is "pass".

The second group of query results include the grades, corresponding to the weights in the data sub-table E(weight_1) and the data sub-table E(weight_2), in the data sub-table E(child_1) and the data sub-table E(child_2), and an identifier (e.g., E(1) and E(0)) of the data. For example, the grade corresponding to the weight 80 in the data sub-table E(weight_1) is "good". In the data sub-table E(weight_2), the grade corresponding to the weight 66 is "pass", the grade corresponding to the weight 60 is "pass", and the grade corresponding to the weight 65 is "pass".

Alternatively, in a case that the second group of data sub-table query requests are configured to request querying the fourth group of data sub-tables (e.g., the data sub-table E(level_1) and data sub-table E(level_2)) in order to obtain the attribute values of the fourth attribute (e.g., grade) matching the attribute values of the first attribute (e.g., score) in the first group of data sub-tables (e.g., the data sub-table E(stu_1') and data sub-table E(stu_2)), the first group of query results include encrypted data of the attribute values of the first attribute (e.g., score) in the first group of data sub-tables (e.g., the data sub-table E(stu_1') and data sub-table E(stu_2)) and encrypted data, queried from the second group of data sub-tables (e.g., the data sub-table E(child_1) and data sub-table E(child_2)), of the attribute values of the second attribute (e.g., grade) matching the attribute values of the first attribute in the first group of data sub-tables, and the second group of query results include encrypted data of the attribute values of the first attribute in the first group of data sub-tables and encrypted data, queried from the fourth group of data sub-tables, of the attribute values of the fourth attribute matching the attribute values of the first attribute in the first group of data sub-tables.

Specifically, the second group of query results include the grades, corresponding to the scores in the data sub-table E(stu_1') and the data sub-table E(stu_2), in the data sub-table E(level_1) and the data sub-table E(level_2), and an identifier (E(1), E(0), or the like) of the data. For example, in the data sub-table E(stu_1'), the grade corresponding to the score 80 is "overweight", and the grade corresponding to the score 90 is "overweight". In the data sub-table E(stut_2), the grade corresponding to the score 70 is "normal", the grade corresponding to the score 60 is "good", and the grade corresponding to the score 65 is "good".

Alternatively, in a case that the second group of data sub-table query requests are configured to request querying the fourth group of data sub-tables (e.g., the data sub-table E(level_1) and data sub-table E(level_2)) in order to obtain the attribute values of the fourth attribute (e.g., grade) matching the attribute values of the third attribute (e.g., weight) in the third group of data sub-tables (e.g., the data sub-table E(weight_1) and data sub-table E(weight_2)), the first group of query results include encrypted data of the attribute values of the first attribute (e.g., score) in the first group of data sub-tables (e.g., the data sub-table E(stu_1') and data sub-table E(stu_2)) and encrypted data, queried from the second group of data sub-tables (e.g., the data sub-table E(child_1) and data sub-table E(child_2)), of the attribute values of the second attribute (e.g., grade) matching the attribute values of the first attribute in the first group of data sub-tables, and the second group of query results include encrypted data of the third attribute in the third group of data sub-tables (e.g., the data sub-table E(weight_1) and data sub-table E(weight_2)) and encrypted data, queried from the fourth group of data sub-tables, of the attribute values of the fourth attribute matching the attribute values of the third attribute in the third group of data sub-tables.

Specifically, the second group of query results include: the grades, corresponding to the weight in the data sub-table E(weight_1) and the weight in the data sub-table E(weight_2), in the data sub-table E(level_1) and the data sub-table E(level_2), and an identifier E(1) or E(0)) of the data, for example, in the data sub-table E(weight_1), the grade corresponding to the weight 80 is "overweight"; and in the data sub-table E(weight_2), the grade corresponding to the weight 66 is "good", the grade corresponding to the weight 60 is "good", and the grade corresponding to the weight 65 is "good".

In this method, the server may return both the second group of query results and the first group of query results to the client. Although the passive persistent adversary may observe all encrypted access, the second group of query results may interfere with statistics collection on frequencies of the first group of query results. For example, the passive persistent adversary is unable to determine which query results (e.g., the first group of query results) are the ones that a user really wishes to query, and which query results are obfuscated false query results (e.g., the second group of query results), thereby making it impossible to perform statistics collection on the frequency of the query results, and improving the security of the query results returned by the server.

In the embodiments, the method further includes:

S71: Update the first data table to a fifth data table based on a first difference between a first real data table and a second real data table, in a case that the first data table is a data table obtained by performing a first smoothing process on the attribute values of the first attribute in the first real data table and the first real data table is updated to the second real data table, the first smoothing process being configured for making the attribute values of the first attribute in the first real data table appear in the first data table for the same number of times, and a second difference between the first data table and the fifth data table being the same as the first difference;

S72: Determine whether to perform a second smoothing process on the second real data table based on the second real data table and the fifth data table;

S73: Perform the second smoothing process on the second real data table, to obtain a sixth data table, and replace the first data table on the server with the sixth data table, in a case of determining to perform the second smoothing process on the second real data table, the second smoothing process being configured for making the attribute values of the first attribute in the second real data table appear in the sixth data table for the same number of times; and

S74: Replace the first data table on the server with the fifth data table in a case of determining to skip the second smoothing process on the second real data table.

Data acquired by the client may change, and as a result, data stored in the server may also change. In this case, the smoothing process may, but is not limited to, be performed on the changed data again, or the smoothing process is not performed, to ensure the frequency security of the data in the server. In some embodiments of the present disclosure, in a case of determining to skip the second smoothing process on the second real data table, the number of times that the attribute values appear in the second real data table is not similar to the number of times that the attribute values appear in the fifth data table. Namely, the second real data table may not leak the number of times that the attribute values appear in the fifth data table. In this case, the second smoothing process may, but is not limited to, be not performed on the second real data table, but the first data table on the server is replaced with the fifth data table. In this method, computer resources required for performing the smoothing process on a data table are greatly saved, and utilization of the computer resources is improved.

In the embodiments of the present disclosure, in a case of determining to perform the second smoothing process on the second real data table, the number of times that the attribute values appear in the second real data table is similar to the number of times that the attribute values appear in the fifth data table. Namely, the second real data table may leak the number of times that the attribute values appear in the fifth data table. In this case, the second smoothing process may, but is not limited to, be performed on the second real data table, to obtain a sixth data table, and the first data table on the server is replaced with the sixth data table. In this method, in a case that the data in the server dynamically changes, the security of the data stored in the server is greatly improved.

To better understand the second smoothing process in the embodiments of the present disclosure, explanations and descriptions for the second smoothing process in the embodiments of the present disclosure are provided below with reference to certain embodiments, and may, but are not limited to, be applicable to the embodiments of the present disclosure.

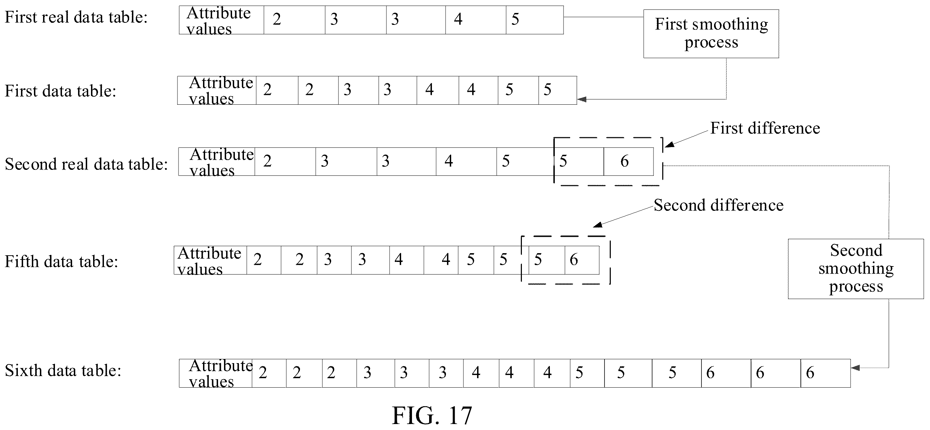

As shown in FIG. 17, the first real data table records the attribute values of a first attribute, which are 2, 3, 3, 4, and 5 respectively. A first smoothing process is performed on the attribute values of the first attribute in the first real data table, to obtain a first data table. The first data table records the attribute values of the first attribute, which are 2, 2, 3, 3, 4, 4, 5, and 5 respectively. In a case that the first real data table is updated to a second real data table, for example, the attribute values 5 and 6 are added to the first real data, the second real data table records the attribute values of the first attribute, which are 2, 3, 3, 4, 5, 5, and 6 respectively. The first data table is updated to a fifth data table based on the first difference between the first real data table and the second real data table. The fifth data table records the attribute values of the first attribute, which are 2, 2, 3, 3, 4, 4, 5, 5, 5, and 6 respectively. A second difference between the first data table and the fifth data table is the same as the first difference. In the case of determining to perform a second smoothing process on the second real data table, the second smoothing process is performed on the second real data table, to obtain a sixth data table. The sixth data table records the attribute values of the first attribute, which are 2, 2, 2, 3, 3, 3, 4, 4, 4, 5, 5, 5, 6, 6, and 6 respectively. Moreover, the first data table on the server is replaced with the sixth data table.

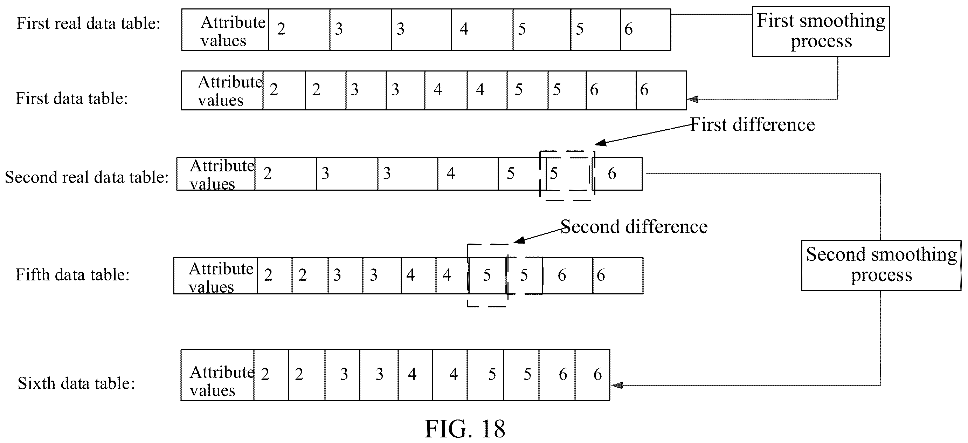

As shown in FIG. 18, the first real data table records the attribute values of the first attribute, which are 2, 3, 3, 4, 5, 5, and 6 respectively. The first data table is obtained by performing the first smoothing process on the attribute values of the first attribute in the first real data table. The first data table records the attribute values of the first attribute, which are 2, 2, 3, 3, 4, 4, 5, 5, 6, and 6 respectively. In a case that the first real data table is updated to the second real data table, for example, the attribute value 5 is deleted from the first real data table, the second real data table records the attribute values of the first attribute, which are 2, 3, 3, 4, 5, and 6 respectively. The first data table is updated to a fifth data table based on the first difference between the first real data table and the second real data table. The fifth data table records the attribute values of the first attribute, which are 2, 2, 3, 3, 4, 4, 5, and 6 respectively. A second difference between the first data table and the fifth data table is the same as the first difference. In the case of determining to perform a second smoothing process on the second real data table, the second smoothing process is performed on the second real data table, to obtain a sixth data table. The sixth data table records the attribute values of the first attribute, which are 2, 2, 3, 3, 4, 4, 5, 5, 6, and 6 respectively. The first data table on the server is replaced with the sixth data table.

In the embodiments, the determining whether to perform a second smoothing process on the second real data table based on the second real data table and the fifth data table includes:

S81: Determine a distribution difference between the attribute values of the first attribute in the second real data table and the attribute values of the first attribute in the fifth data table;

S82: Determine to perform the second smoothing process on the second real data table in a case that the distribution difference is less than or equal to a preset threshold; and

S83: Determine to skip the second smoothing process on the second real data table in a case that the distribution difference is greater than the preset threshold.

In some embodiments of the present disclosure, the distribution difference may, but is not limited to, include a difference between the number of times that the attribute values of the first attribute appear in the second real data table and the number of times that the attribute values of the first attribute appear in the fifth data table. The chi-square value may, but is not limited to, be determined based on the difference between the number of times that the attribute values of the first attribute appear in the second real data table and the number of times that the attribute values of the first attribute appear in the fifth data table.

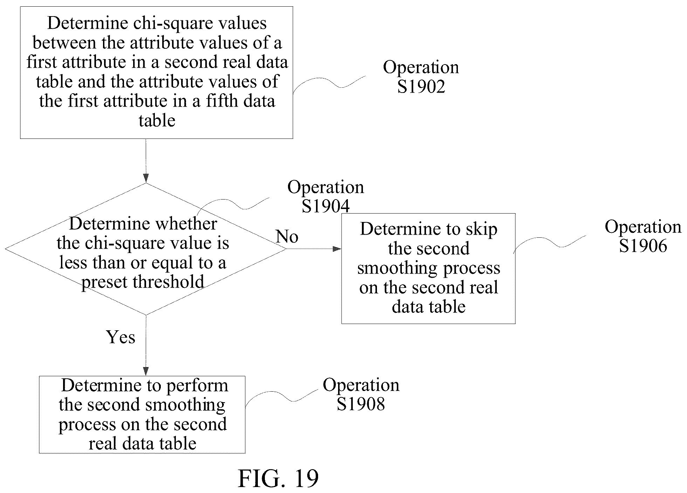

As shown in FIG. 19, chi-square values between the attribute values of the first attribute in the second real data table and the attribute values of the first attribute in the fifth data table may, but are not limited to, be determined by the following operations:

Operation S1902: Determine chi-square values between the attribute values of the first attribute in a second real data table and the attribute values of the first attribute in the fifth data table.

Specifically, the determining may, but is not limited to be performed by the following formula:

$$\chi^2 = \Sigma((O_i - E_i)^2 / E_i)$$

where $\chi^2$ is the chi-square value of an $i^{th}$ value of the first attribute, $O_i$ is the number of times that the $i^{th}$ value of the first attribute appears in the fifth data table appears, $E_i$ is the number of times that the $i^{th}$ value of the first attribute appears in the second real data table, and $\Sigma$ represents summation on all grids. A degree of freedom equals to the number of frequency types minus 1, and a significance level (e.g., 0.05 or 0.001, which is not limited in the present disclosure) is selected. The number of frequency types may, but is not limited to, be the number of different values of the first attribute in the fifth data table and the second real data table. A chi-square distribution table is searched based on the degree of freedom and the significance level, to determine a critical value of chi-square values.

Operation S1904: Determine whether the chi-square value is less than or equal to a preset threshold. In a case that the chi-square value is less than or equal to the preset threshold, operation S1908 is performed. In a case that the chi-square value is greater than the preset threshold, operation S1906 is performed.

Operation S1906: Determine to skip the second smoothing process on the second real data table. Specifically, in this case, the numbers of times that the attribute values appear in the fifth data table and the second real data table are not similar, and the second smoothing process needs not to be performed on the second real data table.

Operation S1908: Determine to perform the second smoothing process on the second real data table. Specifically, in this case, the numbers of times that the attribute values appear in the fifth data table and the second real data table are similar, and the second smoothing process needs to be performed on the second real data table.

In some embodiments of the present disclosure, the smoothing process is performed on the second real data table only in a case that the distribution difference is less than or equal to a preset threshold, and the smoothing process needs not to be performed on the second real data table in a case that the distribution difference is greater than the preset threshold. In this method, computer resources required for performing the smoothing process on the second real data table are saved, and utilization of the computer resources is improved.

In the embodiments, the transmitting the first group of data sub-table query requests and the second group of data sub-table query requests to the server includes:

S91: Repeatedly perform the following operations, until both the first group of data sub-table query requests and the second group of data sub-table query requests are transmitted to the server: randomly select one or more data sub-table query requests from the data sub-table query requests that are still not transmitted to the server, in the first group of data sub-table query requests and the second group of data sub-table query requests, and transmit the one or more randomly selected data sub-table query requests to the server.

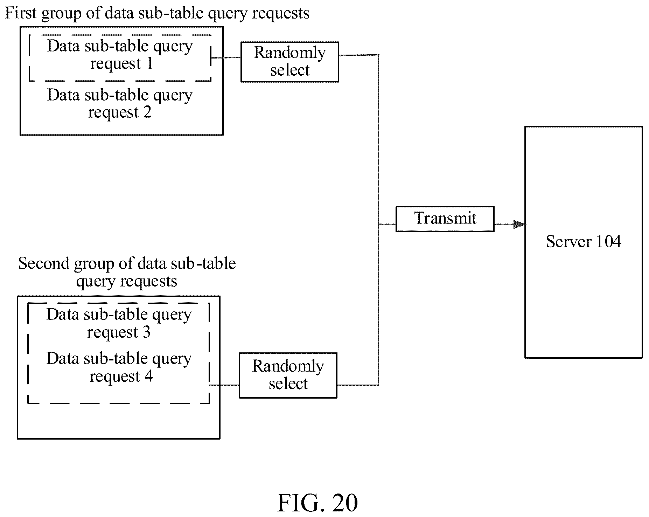

To obfuscate the transmission sequence of the data sub-table query requests in the first group of data sub-table query requests, as shown in FIG. 20, the first group of data sub-table query requests may, but is not limited to, include a data sub-table query request 1 and a data sub-table query request 2; and the data sub-table query requests that are still not transmitted to the server, in the second group of data sub-table query requests, may, but are not limited to, include a data sub-table query request 3 and a data sub-table query request 4. In this case, a data sub-table query request 1 may, but is not limited to, be randomly selected from the first group of data sub-table query requests, and a data sub-table query request 3 and a data sub-table query request 4 may be randomly selected from the data sub-table query requests that are still not transmitted to the server, in the second group of data sub-table query requests, and transmitted to the server 104. In this method, the transmission sequence of the data sub-table query requests in the first group of data sub-table query requests is obfuscated, and the security in transmitting the data query request to the server is improved.

In the embodiments, the method further includes:

S101: The first group of data sub-tables are data sub-tables obtained by splitting the first data table based on a value range of the attribute values of the first attribute, the value range of the attribute values of the first attribute in each data sub-table of the first group of data sub-tables being different; and

S102: The second group of data sub-tables are data sub-tables obtained by splitting the second data table based on a value range of the attribute values of the second attribute, the value range of the attribute values of the second attribute in each data sub-table of the second group of data sub-tables being different.

Different attribute values of the attributes in the data tables may differ greatly, and the numbers of times that the different attribute values of the attributes in the data tables appear may be different. In this case, the attribute values that are in similar value ranges of the attribute values may, but are not limited to, be split into the same data sub-table. For example, the attribute values that are in the similar value ranges of attribute values in the data tables may, but are not limited to, be placed in the same sub-table by using a k-means clustering method, a hierarchical clustering method, or the like. Then, the smoothing process is performed on the data sub-table obtained by splitting.

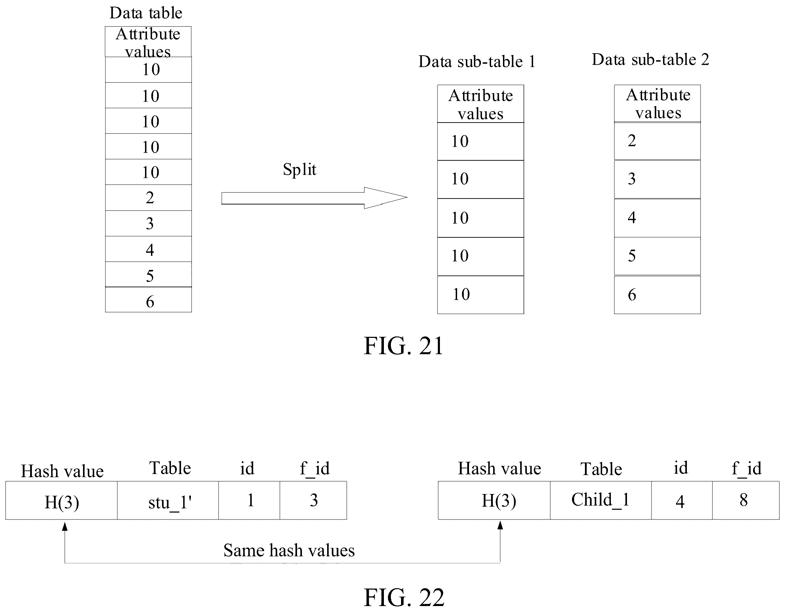

As shown in FIG. 21, attribute values are recorded in a data table, and may, but are not limited to, include 10, 10, 10, 10, 10, 2, 3, 4, 5, and 6. In a related technology, a data table is not split, but the smoothing process is directly performed on the data table that is not split. In this case, new data (e.g., 2, 2, 2, 2, 3, 3, 3, 3, 4, 4, 4, 4, 5, 5, *5, 5,* 6, 6, 6, and 6) needs to be introduced into the data table. In an extreme case, spatial expansion and latency of $O(n^2)$ may be caused. According to the method in some embodiments of the present disclosure, the data table is first split into a plurality of data sub-tables having similar attribute value ranges, for example, the data sub-table 1 and the data sub-table 2. The attribute value in the data sub-table 1 is 10, the attribute values in the data sub-table 2 are in a range of 2 to 6, and the attribute values in the data sub-table 2 may, but are not limited to, include 2, 3, 4, 4, 5, and 6. The numbers of times that the attribute values of different values appear in the data sub-table 1 are the same, and the numbers of times that the attribute values of different values appear in the data sub-table 2 are the same. Therefore, the smoothing process needs not to be performed on the data sub-table 1 and the data sub-table 2. Compared with a related technology in which new data still needs to be introduced to perform the smoothing process on the attribute values in the data table in the above case, the method in some embodiments of the present disclosure greatly reduces consumption of storage space and processing time for data frequency smoothing.

In the embodiments, the method further includes:

S111: The data table query request is configured to request querying the second data table in order to obtain the second attribute value of the second attribute having a first matching relationship with the first attribute value of a first attribute, the first matching relationship referring to that a first hash value of the first attribute value of the first attribute is the same as a second hash value of the second attribute value of the second attribute, or the first hash value of the first attribute value of the first attribute is the same as a third hash value of a value in a first target value range, and the first target value range being a value range represented by one attribute value of one attribute corresponding to the second attribute in the second data table; and

S112: The first group of data sub-table query requests are configured to request querying the second group of data sub-tables in order to obtain the second attribute value of the second attribute having a second matching relationship with the first attribute value of the first attribute in the first group of data sub-tables, the second matching relationship referring to that the first hash value of the first attribute value of the first attribute is the same as the second hash value of the second attribute value of the second attribute, or the first hash values of the first attribute value of the first attribute is the same as a fourth hash value of a value in a second target value range, and the second target value range being a value range represented by one attribute value of one attribute corresponding to the second attribute in the second group of data sub-tables.

In some embodiments of the present disclosure, the method further includes: the second group of data sub-table query requests are configured to request querying the second group of data sub-tables in order to obtain the attribute values of the second attribute having a third matching relationship with the attribute values of the third attribute in the third group of data sub-tables, the third matching relationship referring to that the hash values of the attribute values of the third attribute are the same as the hash values of the attribute values of the second attribute, or the hash values of the attribute values of the third attribute are the same as the hash value of a value in a second target value range, and the second target value range being a value range represented by one attribute value of one attribute corresponding to the second attribute in the second group of data sub-tables.

Alternatively, the second group of data sub-table query requests are configured to request querying a fourth group of data sub-tables in order to obtain the attribute values of a fourth attribute having a fourth matching relationship with the attribute values of the first attribute in the first group of data sub-tables, where the fourth matching relationship refers to that the hash values of the attribute values of the fourth attribute are the same as the hash values of the attribute values of the first attribute, or the hash values of the attribute values of the first attribute are the same as the hash value of a value in a third target value range, and the third target value range is a value range represented by one attribute value of one attribute corresponding to the fourth attribute in the fourth group of data sub-tables.

Alternatively, the second group of data sub-table query requests are configured to request querying the fourth group of data sub-tables in order to obtain the attribute values of a fourth attribute having a fifth matching relationship with the attribute values of the third attribute in the third group of data sub-tables, where the fifth matching relationship refers to that the hash values of the attribute values of the fourth attribute are the same as the hash values of the attribute values of the third attribute, or the hash values of the attribute values of the third attribute are the same as the hash value of a value in a third target value range, and the third target value range is a value range represented by one attribute value of one attribute corresponding to the fourth attribute in the fourth group of data sub-tables.

In some embodiments of the present disclosure, the second data table may, but is not limited to, be queried in order to obtain the attribute values of the second attribute having the first matching relationship with the attribute values of the first attribute by the following operations: acquire a first group of hash values of the one or more attribute values of the first attribute; acquire a second group of hash values of the one or more attribute values of the second attribute; search the second group of hash values one by one for a hash value same as a first hash value, where the first hash value is a hash value in the first group of hash values; and determine that the attribute values of a first attribute corresponding to the first hash value and the attribute values of a second attribute corresponding to the second hash value meet the first matching relationship, in a case that a second hash value same as the first hash value is found in the second group of hash values.

As shown in FIG. 22, in a case that the hash value H(3) of an attribute (e.g., score) in the data sub-table stu_1' is the same as the hash value H(3) of an attribute (e.g., grade) in the data sub-table child_1, it may, but is not limited to, be determined that the attribute value corresponding to the hash value H(3) of the attribute (e.g., score) in the data sub-table stu_1' matches the attribute (e.g., grade) in the data sub-table child_1, for example, the grade corresponding to the score 90 is "excellent". Join between data of different attributes in a plurality of data tables is implemented by hash-join, and a join result can be obtained by comparing only whether the hash values of the attribute values of the different attributes in the different data tables are the same, thereby improving the data query efficiency.

To better understand the method for querying a data table in the embodiments of the present disclosure, explanations and descriptions for the method for querying a data table in the embodiments of the present disclosure are provided below with reference to certain embodiments, and may, but are not limited to, be applicable to the embodiments of the present disclosure.

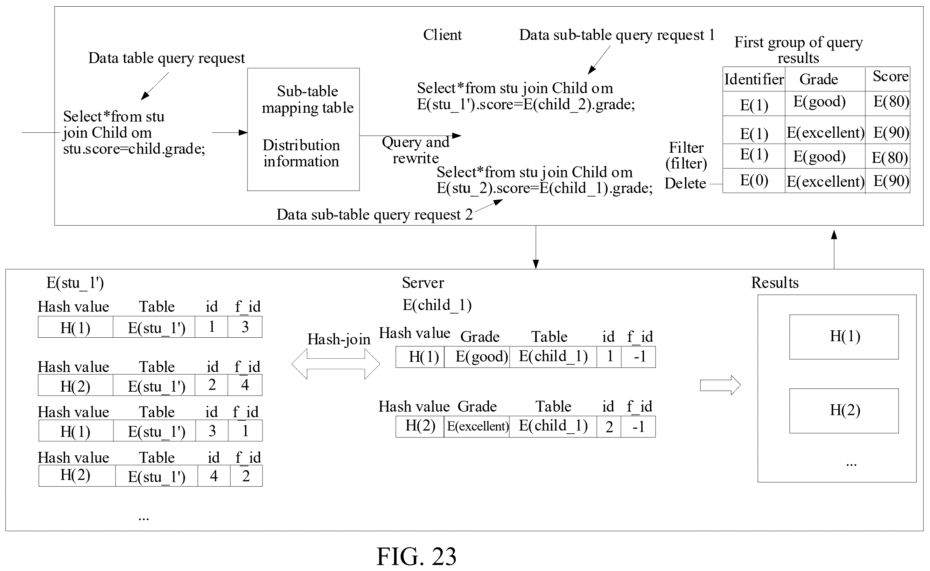

As shown in FIG. 23, in a case that a data table query request (e.g., Select*from stu join Child om stu.score=child.grade) is acquired at the client, it may be determined that the grade corresponding to a score in the data table stu is to be queried in the data table child. In this case, specifically, querying of the data table in some embodiments of the present disclosure may, but is not limited to, be implemented by the following operations: when a client receives a data table query request (e.g., Select*from stu join Child om stu.score=child.grade), first, the original table names (e.g., stu and child) carried in the data table query request are matched based on a sub-table mapping table stored at the client, the original table names (e.g., stu and child) and attribute names (e.g., score and grade) in the data table query request are replaced with the encrypted table names (e.g., E(stu_1'), E(stu_2), E(child_1), and E(child_2)) of the corresponding data sub-tables and attribute names (e.g., E(score_1), E(score_2), E(grade_1), and E(grade_2)), and a plurality of new data sub-table query requests (e.g., the first group of data sub-table query requests) are generated. In addition, a second group of data sub-table query requests are generated for the first group of data sub-table query requests. The second group of data sub-table query requests may, but are not limited to, be configured for querying the hash values of the grades in the E(child_1) and E(child_2) for the hash values matching the hash values of the weights in the E(weight_1) and E(weight_2). To obfuscate the order of the query sequence, a data sub-table query request may, but is not limited to, be randomly selected from the first group of data sub-table query requests and the second group of data sub-table query requests, and transmitted to the server.

In the case of receiving the data sub-table query request, the server determines the corresponding AES ciphertext table and hash ciphertext table based on the encrypted table name in the data sub-table query request. Then, a table join operation is performed by selecting the corresponding hash ciphertext table based on the attribute names in the query, and hash-join is performed via a Value attribute, to obtain a first group of query results and a second group of query results, and the first group of query results and the second group of query results are returned to the client.

For example, the encrypted table names in the data sub-table query request acquired by the server include E(stu_1') and E(child_1), and the corresponding AES ciphertext table and hash ciphertext table may, but is not limited to, be determined based on the E(stu_1') and E(child_1). Then, based on the attribute names (e.g., E(score_1) and E(grade_1)), the corresponding hash ciphertext table is selected to perform a table join operation.  Query results are acquired by performing hash-join via a Value attribute.

Specifically, hash data corresponding to the encrypted grade E(good) and hash data corresponding to the encrypted grade E(excellent) are stored in the hash ciphertext table of the data sub-table E(child_1). The hash data corresponding to the encrypted grade E(good) may, but is not limited to, include a hash value H(1) corresponding to the encrypted score E(80), the grade E(good) corresponding to the hash value H(1), the table E(child_1) to which the hash data belongs, and the id (1) and f_id (-1) of the grade E(good) in the data table E(child_1). The id being 1 is configured for representing that the grade E(good) is the first or in the first row in an attribute column in the data table E(child_1). The f_id being -1 is configured for identifying that the data table E(child_1) does not have the next piece of data in which the grade is E(good). The hash data corresponding to the encrypted grade E(excellent) may, but is not limited to, include a hash value H(2) corresponding to the encrypted score E(90), the grade E(excellent) corresponding to the hash value H(2), the table E(child_1) to which the hash data belongs, and the id (2) of the grade E(excellent) in the data table E(child_1). The id being 2 is configured for representing that the grade E(excellent) is the second or in the second row in an attribute column in the data table E(child_1). The f_id being -1 is configured for identifying that the data table E(child_1) does not have the next piece of data in which the grade is E(excellent).

For example, the hash values of different scores in the data sub-table E(stu_1') are matched with the hash value corresponding to score ranges in the data sub-table E(child_1) and the data sub-table E(child_2), and in a case that hash values same as the hash values of the scores exist in the hash values in the score ranges, the grades corresponding to the hash values same as the hash values of the scores, existing in the hash values in the score ranges, are determined as the grades corresponding to the scores, for example, the grade corresponding to the score 80 is "good", and the grade corresponding to the score 90 is "excellent".

In a case that the client obtains the query results returned by the server, the client may, but is not limited to, delete the query results of the second group of data sub-table query requests, and reserve the first group of query results of the first group of data sub-table query requests, based on the request identifiers carried in the query results. Then, the client combines the first group of query results, deletes data identified as E(0) from the query results of the first group of data sub-table query requests, to obtain all query results of the first group of data query requests, and returns all the query results to a user.

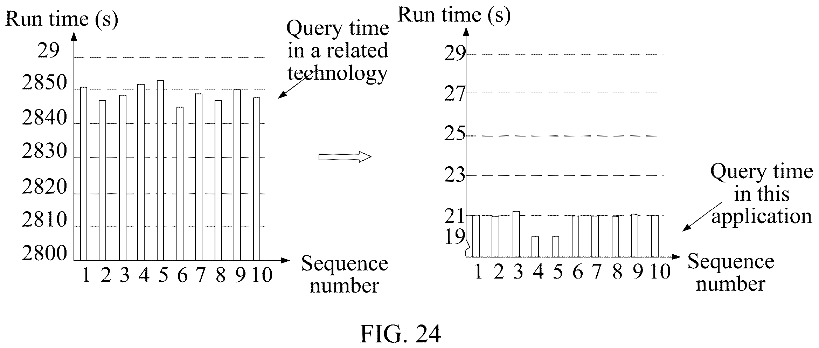

According to the method for querying a data table in some embodiments of the present disclosure, the query latency of data tables is greatly reduced. As shown in FIG. 24, a query time in a related technology is usually on the order of thousand seconds, for example, a query time in the related technology is usually about 2,800 s to 2,900 s. Compared with the query time in the related technology, the latency of the method for querying a data table in some embodiments of the present disclosure is significantly reduced, and is usually several percent of the query time in the related technology, for example, in some embodiments of the present disclosure, the query time is usually about 10 s to 21 s, which has a breakthrough performance advantage, greatly improves data table query efficiency, and makes table join of ciphertext data applicable to an industrial scenario.

For ease of description, the foregoing method embodiments are described as a series of action combinations. However, those skilled in the art are to know that the present disclosure is not limited to the described order of the actions because some operations may be performed in other orders or performed at the same time according to the present disclosure. In addition, those skilled in the art are also to know that the embodiments described in this specification are some embodiments, and the involved actions and modules are not necessarily required in the present disclosure.

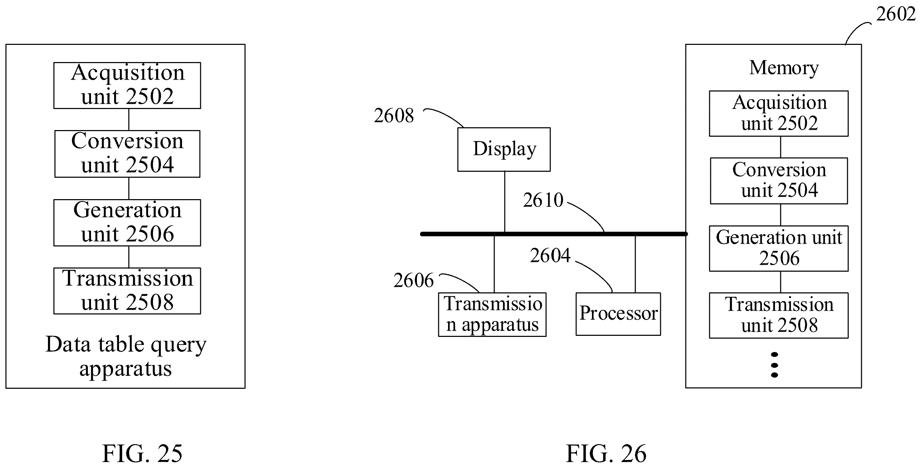

According to another aspect of the embodiments of the present disclosure, a data table query apparatus for implementing the method is further provided. As shown in FIG. 25, the apparatus includes:

an acquisition unit 2502, configured to acquire a data table query request, the data table query request being configured to request querying a second data table on a server in order to obtain a second attribute value of a second attribute matching a first attribute value of a first attribute, and the first attribute being an attribute included in a first data table on the server;

a conversion unit 2504, configured to convert the data table query request into a first group of data sub-table query requests, the first group of data sub-table query requests being configured to request querying a second group of data sub-tables in order to obtain the second attribute value of the second attribute matching the first attribute value of the first attribute in a first group of data sub-tables, the first group of data sub-tables being data sub-tables obtained by splitting the first data table based on a plurality of attribute values of the first attribute, and the second group of data sub-tables being data sub-tables obtained by splitting the second data table based on a plurality of attribute values of the second attribute;

a generation unit 2506, configured to generate a second group of data sub-table query requests, the second group of data sub-table query requests being different from the first group of data sub-table query requests; and

a transmission unit 2508, configured to transmit the first group of data sub-table query requests and the second group of data sub-table query requests to the server, and acquire a first group of query results corresponding to the first group of data sub-table query requests and a second group of query results corresponding to the second group of data sub-table query requests, the first group of query results and the second group of query results being transmitted back by the server.

According to the embodiments provided in the present disclosure, the data table query request acquired at the client is converted into the first group of data sub-table query requests, and the second group of data sub-table query requests are generated. In one direction, when the client randomly transmits the first group of data sub-table query requests and the second group of data sub-table query requests to the server, transmission of the second group of data sub-table query requests may interfere with the transmission sequence of query requests in the first group of data sub-table query requests. In the other direction, the query results of the second group of data sub-table query requests may interfere with statistics collection on the frequency of the query results of the first group of data sub-table query requests. Therefore, the security in querying a data table is improved.

The generation unit may include: a first generation module, configured to generate the second group of data sub-table query requests, the second group of data sub-table query requests being configured to request querying the second group of data sub-tables in order to obtain the second attribute value of the second attribute matching a third attribute value of a third attribute in a third group of data sub-tables, and the third group of data sub-tables being data sub-tables obtained by splitting a third data table on the server based on a plurality of attribute values of the third attribute; and/or a second generation module, configured to generate the second group of data sub-table query requests, the second group of data sub-table query requests being configured to request querying a fourth group of data sub-tables in order to obtain a fourth attribute value of a fourth attribute matching the first attribute value of the first attribute in the first group of data sub-tables, and the fourth group of data sub-tables being data sub-tables obtained by splitting a fourth data table on the server based on a plurality of attribute values of the fourth attribute; and/or a third generation module, configured to generate the second group of data sub-table query requests, the second group of data sub-table query requests being configured to request querying the fourth group of data sub-tables in order to obtain the fourth attribute value of the fourth attribute matching the third attribute value of the third attribute in the third group of data sub-tables.

The apparatus may further include: a first searching unit, configured to search a client for an identifier of a data table meeting a first matching condition with the first data table, to obtain the identifier of the third data table, and acquire, from the client, the identifiers of the third group of data sub-tables having a mapping relationship with the third data table, the first matching condition including that a third value range is at least partially the same as a first value range, the first value range being a value range of the attribute values of the first attribute in the first data table, and the third value range being a value range of the attribute values of the third attribute in the third data table; and/or a second searching unit, configured to search the client for identifiers of data sub-tables meeting a second matching condition with the data sub-tables of the first group of data sub-tables, to obtain the identifiers of the third group of data sub-tables, the second matching condition including that a third value sub-range is at least partially the same as a first value sub-range, the first value subrange being a value range of the attribute values of the first attribute in the data sub-tables of the first group of data sub-tables, and the third value subrange being a value range of the attribute values of the third attribute in the data sub-tables of the third group of data sub-tables.

The first matching condition may further include: a first number of times is different from a third number of times, the first number of times being the number of times that a first value appears in the first attribute in the first data table, the third number of times being the number of times that the first value appears in the third attribute in the third data table, and the first value being a value same in the third value range and the first value range; and/or a first proportion is different from a third proportion, the first proportion being a proportion that the first value appears in the first attribute in the first data table, and the third proportion being a proportion that the first value appears in the third attribute in the third data table, the first proportion being a proportion obtained by dividing the first number of times by a first total number of times, the first total number of times being a sum of the numbers of times that the values in the first value range appear in the first attribute in the first data table, the third proportion being a proportion obtained by dividing the third number of times by a third total number of times, and the third total number of times being a sum of the numbers of times that the values in the third value range appear in the third attribute in the third data table; and/or the second matching condition further includes: a first sub-number of times is different from a third sub-number of times, the first sub-number of times being the number of times that a third value appears in the first attribute in one data sub-table of the first group of data sub-tables, the third sub-number of times being the number of times that the third value appears in the third attribute in another data sub-table of the third group of data sub-tables, and the third value being a value same in the third value subrange and the first value subrange; and/or a first sub-proportion is different from a third sub-proportion, the first sub-proportion being a proportion that the third value appears in the first attribute in one data sub-table of the first group of data sub-tables, and the third sub-proportion being a proportion that the third value appears in the third attribute in the another data sub-table of the third group of data sub-tables, the first sub-proportion being a proportion obtained by dividing the first sub-number of times by a first sub-table total number of times, the first sub-table total number of times being a sum of the numbers of times that the values in the first value sub-range appear in the first attribute in the one data sub-table, the third sub-proportion being a proportion obtained by dividing the third sub-number of times by a third sub-table total number of times, and the third sub-table total number of times being a sum of the numbers of times that the values in the third value range appear in the third attribute in the other data sub-table.

The apparatus may further include: a third searching unit, configured to search a client for an identifier of a data table meeting a third matching condition with the second data table, to obtain the identifier of the fourth data table, and acquire, from the client, the identifiers of the fourth group of data sub-tables having a mapping relationship with the fourth data table, the third matching condition including that a fourth value range is at least partially the same as a second value range, the second value range being a value range of the attribute values of the second attribute in the second data table, and the fourth value range being a value range of the attribute values of the fourth attribute in the fourth data table; and/or a fourth searching unit, configured to search the client for identifiers of data sub-tables meeting a fourth matching condition with the data sub-tables of the second group of data sub-tables, to obtain the identifiers of the fourth group of data sub-tables, the fourth matching condition including that a fourth value subrange is at least partially the same as a second value subrange, the second value subrange including a value range of the attribute values of the second attribute in the data sub-tables of the second group of data sub-tables, and the fourth value subrange including a value range of the attribute values of the fourth attribute in the data sub-tables of the fourth group of data sub-tables.

The third matching condition may further include: a second number of times is different from a fourth number of times, the second number of times being the number of times that a second value appears in the second attribute in the second data table, the fourth number of times being the number of times that the second value appears in the fourth attribute in the fourth data table, and the second value being a value same in the fourth value range and the second value range; and/or a second proportion is different from a fourth proportion, the second proportion being a proportion that the second value appears in the second attribute in the second data table, the fourth proportion being a proportion that the second value appears in the fourth attribute in the fourth data table, the second proportion being a proportion obtained by dividing the second number of times by a second total number of times, the second total number of times being a sum of the numbers of times that the values in the second value range appear in the second attribute in the second data table, the fourth proportion being a proportion obtained by dividing the fourth number of times by a fourth total number of times, and the fourth total number of times being a sum of the numbers of times that the values in the fourth value range appear in the fourth attribute in the fourth data table; and/ or the fourth matching condition further includes: a second sub-number of times is different from a fourth sub-number of times, the second sub-number of times being the number of times that a fourth value appears in the second attribute in one data sub-table of the second group of data sub-tables, the fourth sub-number of times being the number of times that the fourth value appears in the fourth attribute in another data sub-table of the fourth group of data sub-tables, and the fourth value being a value same in the fourth value subrange and the second value subrange; and/or a second sub-proportion is different from a fourth sub-proportion, the second sub-proportion being a proportion that the fourth value appears in the second attribute in the one data sub-table, the fourth sub-proportion being a proportion that the fourth value appears in the fourth attribute in the another data sub-table, the second sub-proportion being a proportion obtained by dividing the second sub-number of times by a second sub-table total number of times, the second sub-table total number of times being a sum of the numbers of times that the values in the second value sub-range appear in the second attribute in the one data sub-table, the fourth sub-proportion being a proportion obtained by dividing the fourth sub-number of times by a fourth sub-table total number of times, and the fourth sub-table total number of times being a sum of the numbers of times that the values in the fourth value range appear in the fourth attribute in the other data sub-table.

In a case that the second group of data sub-table query requests are configured to request querying the second group of data sub-tables in order to obtain the second attribute value of the second attribute matching the third attribute value of the third attribute in the third group of data sub-tables, the first group of query results include first encrypted data of the first attribute value of the first attribute in the first group of data sub-tables and second encrypted data, queried from the second group of data sub-tables, of the second attribute value of the second attribute matching the first attribute value of the first attribute in the first group of data sub-tables, and the second group of query results include third encrypted data of the third attribute value of the third attribute in the third group of data sub-tables and fourth encrypted data, queried from the second group of data sub-tables, of the second attribute value of the second attribute matching the third attribute value of the third attribute in the third group of data sub-tables; and/or in a case that the second group of data sub-table query requests are configured to request querying the fourth group of data sub-tables in order to obtain the fourth attribute value of the fourth attribute matching the first attribute value of the first attribute in the first group of data sub-tables, the first group of query results include the first encrypted data of the first attribute value of the first attribute in the first group of data sub-tables and the second encrypted data, queried from the second group of data sub-tables, of the second attribute value of the second attribute matching the first attribute value of the first attribute in the first group of data sub-tables, and the second group of query results include the first encrypted data of the first attribute value of the first attribute in the first group of data sub-tables and encrypted data, queried from the fourth group of data sub-tables, of the fourth attribute value of the fourth attribute matching the first attribute value of the first attribute in the first group of data sub-tables; and/or in a case that the second group of data sub-table query requests are configured to request querying the fourth group of data sub-tables in order to obtain the fourth attribute value of the fourth attribute matching the third attribute value of the third attribute in the third group of data sub-tables, the first group of query results include the first encrypted data of the first attribute value of the first attribute in the first group of data sub-tables and encrypted data, queried from the second group of data sub-tables, of the second attribute value of the second attribute matching the first attribute value of the first attribute in the first group of data sub-tables, and the second group of query results include third encrypted data of the third attribute value of the third attribute in the third group of data sub-tables and the fourth encrypted data, queried from the fourth group of data sub-tables, of the fourth attribute value of the fourth attribute matching the third attribute value of the third attribute in the third group of data sub-tables.

The apparatus may further include: an update unit, configured to update the first data table to a fifth data table based on a first difference between a first real data table and a second real data table, in a case that the first data table is a data table obtained by performing a first smoothing process on the attribute values of the first attribute in the first real data table and the first real data table is updated to the second real data table, the first smoothing process being configured for making the attribute values of the first attribute in the first real data table appear in the first data table for the same number of times, and a second difference between the first data table and the fifth data table being the same as the first difference; a determining unit, configured to determine whether to perform a second smoothing process on the second real data table based on the second real data table and the fifth data table; a smoothing unit, configured to perform the second smoothing process on the second real data table, to obtain a sixth data table, and replace the first data table on the server with the sixth data table, in a case of determining to perform the second smoothing process on the second real data table, the second smoothing process being configured for making the attribute values of the first attribute in the second real data table appear in the sixth data table for the same number of times; and a replacement unit, configured to replace the first data table on the server with the fifth data table in a case of determining to skip the second smoothing process on the second real data table.

The determining unit may include: a first determining module, configured to determine a distribution difference between the attribute values of the first attribute in the second real data table and the attribute values of the first attribute in the fifth data table; a second determining module, configured to determine to perform the second smoothing process on the second real data table in a case that the distribution difference is less than or equal to a preset threshold; and a third determining module, configured to determine to skip the second smoothing process on the second real data table in a case that the distribution difference is greater than the preset threshold.

The transmission unit may repeatedly perform the following operations, until both the first group of data sub-table query requests and the second group of data sub-table query requests are transmitted to the server: randomly select one or more data sub-table query requests from the data sub-table query requests that are still not transmitted to the server, in the first group of data sub-table query requests and the second group of data sub-table query requests, and transmit the one or more randomly selected data sub-table query requests to the server.

The first group of data sub-tables may be data sub-tables obtained by splitting the first data table based on a value range of the attribute values of the first attribute, the value range of the attribute values of the first attribute in each data sub-table of the first group of data sub-tables being different. The second group of data sub-tables are data sub-tables obtained by splitting the second data table based on a value range of the attribute values of the second attribute, the value range of the attribute values of the second attribute in each data sub-table of the second group of data sub-tables being different.

The data table query request may be configured to request querying the second data table in order to obtain the second attribute value of the second attribute having a first matching relationship with the first attribute value of the first attribute, the first matching relationship referring to that a first hash value of the first attribute value of the first attribute is the same as a second hash value of the second attribute value of the second attribute, or the first hash values of the first attribute value of the first attribute is the same as a third hash value of a value in a first target value range, and the first target value range being a value range represented by one attribute value of one attribute corresponding to the second attribute in the second data table. The first group of data sub-table query requests are configured to request querying the second group of data sub-tables in order to obtain the second attribute value of the second attribute having a second matching relationship with the first attribute value of the first attribute in the first group of data sub-tables, the second matching relationship referring to that the hash value of the first attribute value of the first attribute is the same as the second hash value of the second attribute value of the second attribute, or the first hash value of the first attribute value of the first attribute is the same as a fourth hash value of a value in a second target value range, and the second target value range being a value range represented by one attribute value of one attribute corresponding to the second attribute in the second group of data sub-tables.

According to still another aspect of the embodiments of the present disclosure, an electronic device for implementing the method for querying a data table is further provided. The electronic device may be a terminal device or a server as shown in FIG. 8. In some embodiments of the present disclosure, an example in which the electronic device is a server is configured for description. As shown in FIG. 26, the electronic device includes a memory 2602 and a processor 2604. The memory 2602 has a computer program stored therein, and the processor 2604 is configured to perform operations in any of the foregoing method embodiments via the computer program.

In some embodiments of the present disclosure, the electronic device may be located in at least one of a plurality of network devices in a computer network.

In some embodiments of the present disclosure, the processor may be configured to perform the following operations via the computer program:

S1: Acquire a data table query request, the data table query request being configured to request querying a second data table on a server in order to obtain the attribute values of a second attribute matching the attribute values of a first attribute, and the first attribute being an attribute included in a first data table on the server;

S2: Convert the data table query request into a first group of data sub-table query requests, the first group of data sub-table query requests being configured to request querying a second group of data sub-tables in order to obtain the attribute values of the second attribute matching the attribute values of the first attribute in a first group of data sub-tables, the first group of data sub-tables being data sub-tables obtained by splitting the first data table based on the plurality of attribute values of the first attribute, and the second group of data sub-tables being data sub-tables obtained by splitting the second data table based on the plurality of attribute values of the second attribute;

S3: Generate a second group of data sub-table query requests, the second group of data sub-table query requests being different from the first group of data sub-table query requests; and

S4: Transmit the first group of data sub-table query requests and the second group of data sub-table query requests to the server, and acquire a first group of query results corresponding to the first group of data sub-table query requests and a second group of query results corresponding to the second group of data sub-table query requests, the first group of query results and the second group of query results being transmitted back by the server.

Those of ordinary skill in the art may understand, that a structure shown in FIG. 26 is only schematic. The electronic device may also be a terminal device such as a smartphone (e.g., an Android mobile phone or an iOS mobile phone), a tablet computer, a palmtop computer, a mobile Internet device (MID), or a PAD. FIG. 26 does not constitute a limitation on the structure of the electronic device. For example, the electronic device may further include more or fewer components (e.g., a network interface) than those shown in FIG. 26, or has a configuration different from that shown in FIG. 26.

The memory 2602 may be configured to store a software program and a module, for example, a program instruction/module corresponding to the method for querying a data table and apparatus in the embodiments of the present disclosure. The processor 2604 runs the software program and the module stored in the memory 2602, to perform various function applications and data processing, i.e., implement the method for querying a data table. The memory 2602 may include a high-speed random memory, and may also include a non-volatile memory, for example, one or more magnetic storage apparatuses, a flash memory, or other nonvolatile solid-state memories. In some embodiments, the memory 2602 may further include memories remotely arranged relative to the processor 2604, and the remote memories may be connected to a terminal via a network. Examples of the network include, but are not limited to, the Internet, an intranet, a local area network, a mobile communication network, and a combination thereof. The memory 2602 may specifically, but is not limited to, be configured to store information such as sample characteristics of items and target virtual resource accounts. In an example, as shown in FIG. 26, the memory 2602 may, but is not limited to, include an acquisition unit 2502, a conversion unit 2504, a generation unit 2506, and a transmission unit 2508 in the data table query apparatus. In addition, the memory may, but is not limited to, further include other modules and units in the data table query apparatus, and the descriptions thereof are omitted in this example.

A transmission apparatus 2606 is configured to receive or transmit data through a network. Specific examples of the network may include wired networks and wireless networks. In an example, the transmission apparatus 2606 includes a network interface controller (NIC). The NIC may be connected to other network devices and a router via network cables, to communicate with the Internet or a local area network. In an example, the transmission apparatus 2606 is a radio frequency (RF) module, which is configured to communicate with the Internet in a wireless manner.

In addition, the electronic device further includes: a display 2608, configured to display order information to be processed; and a connection bus 2610, configured to connect various module components in the electronic device.

In other embodiments, the terminal device or the server may be a node in a distributed system, where the distributed system may be a blockchain system, and the blockchain system may be a distributed system formed by connecting a plurality of nodes through network communication. A peer to peer (P2P) network may be formed between the nodes. A computing device of any form, such as the server, the terminal, and other electronic devices, may become a node in the blockchain system by joining the peer to peer network.

According to an aspect of the present disclosure, a computer program product is provided. The computer program product includes computer programs/instructions, and the computer programs/instructions include program code configured for performing the method shown in a flowchart. In the embodiments, the computer program may be downloaded and installed from a network through a communication part 2709, and/or installed from a removable medium 2711. When the computer program is executed by a central processing unit 2701, various functions provided in the embodiments of the present disclosure are performed. The sequence numbers of the foregoing embodiments of the present disclosure are merely for description purposes but do not imply the preference among the embodiments.

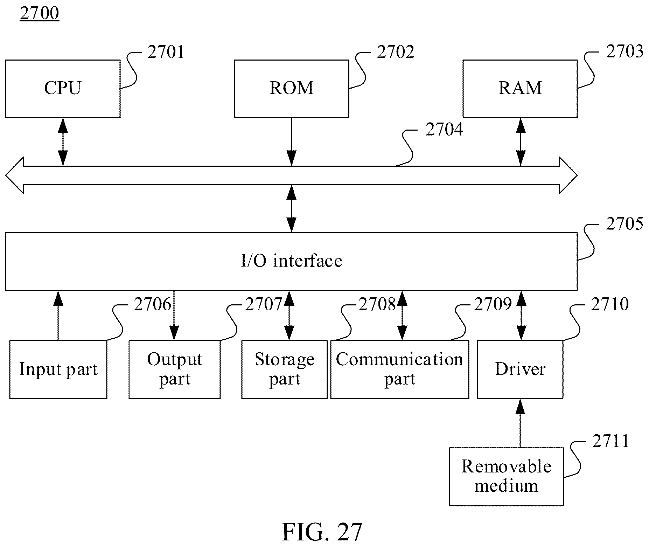

FIG. 27 is a schematic block diagram of the structure of a computer system of an electronic device for implementing all embodiments of the present disclosure. The computer system 2700 of the electronic device shown in FIG. 27 is merely an example, and does not constitute any limitation on the functions and use ranges of the embodiments of the present disclosure. As shown in FIG. 27, the computer system 2700 includes a central processing unit (CPU) 2701, which may execute various proper actions and processing based on a program stored in a read-only memory (ROM) 2702 or a program loaded from a storage part 2708 into a random access memory (RAM) 2703. The RAM 2703 further stores various programs and data required by system operations. The CPU 2701, the ROM 2702, and the RAM 2703 are connected to each other via a bus 2704. An input/output (I/O) interface 2705 is also connected to the bus 2704.

The following components are connected to the input/output interface 2705: an input part 2706 including a keyboard and a mouse; an output part 2707 including a cathode ray tube (CRT), a liquid crystal display (LCD), and a speaker; a storage part 2708 including a hard disk; and a communication part 2709 including a network interface card such as a local area network card or a modem. The communication part 2709 performs communication processing via a network such as the Internet. A driver 2710 is also connected to the input/output interface 2705 as needed. The removable medium 2711, such as a magnetic disk, an optical disc, a magneto-optical disk, or a semiconductor memory, is installed on the drive 2710 as needed, so that a computer program read from the removable medium is installed into the storage part 2708 as needed.

Particularly, according to the embodiments of the present disclosure, the processes described in the various method flowcharts may be implemented as computer software programs. For example, some embodiments of the present disclosure include a computer program product, which includes a computer program carried on a computer-readable medium, and the computer program includes program code configured for performing the methods shown in the flowcharts. In the embodiments, the computer program may be downloaded and installed from a network through the communication part 2709, and/or installed from the removable medium 2711. When the computer program is executed by the CPU 2701, various functions defined in the system of the present disclosure are performed.

According to an aspect of the present disclosure, a computer-readable storage medium is provided. A processor of a computer device reads computer instructions from the computer-readable storage medium, and executes the computer instructions, to enable the computer device to perform the method provided in various implementations in the foregoing embodiments.

Exemplarily, in the embodiments of the present disclosure, the computer-readable storage medium may be configured to store a computer program configured for performing the following operations:

S1: Acquire a data table query request, the data table query request being configured to request querying a second data table on a server in order to obtain a second attribute value of a second attribute matching a first attribute value of a first attribute, and the first attribute being an attribute included in a first data table on the server;

S2: Convert the data table query request into a first group of data sub-table query requests, the first group of data sub-table query requests being configured to request querying a second group of data sub-tables in order to obtain the second attribute value of the second attribute matching the first attribute value of the first attribute in a first group of data sub-tables, the first group of data sub-tables being data sub-tables obtained by splitting the first data table based on the plurality of attribute values of the first attribute, and the second group of data sub-tables being data sub-tables obtained by splitting the second data table based on the plurality of attribute values of the second attribute;

S3: Generate a second group of data sub-table query requests, the second group of data sub-table query requests being different from the first group of data sub-table query requests; and

S4: Transmit the first group of data sub-table query requests and the second group of data sub-table query requests to the server, and acquire a first group of query results corresponding to the first group of data sub-table query requests and a second group of query results corresponding to the second group of data sub-table query requests, the first group of query results and the second group of query results being transmitted back by the server.

Exemplarily, in the embodiments of the present disclosure, those of ordinary skill in the art may understand that all or some operations in the methods of the foregoing embodiments may be performed by a program instructing relevant hardware of a terminal device. The program may be stored in a computer-readable storage medium, and the storage medium may include: a flash drive, a read-only memory (ROM), a random access memory (RAM), a magnetic disk, an optical disc, and the like.

When an integrated unit in the foregoing embodiments is implemented in the form of a software functional unit and sold or used as an independent product, the integrated unit may be stored in the foregoing computer-readable storage medium. Based on such an understanding, the technical solutions of the present disclosure essentially, or a part contributing to the related art, or all or a part of the technical solution, may be implemented in the form of a software product. The computer software product is stored in a storage medium and includes several instructions for instructing one or more computer devices (which may be a PC, a server, a network device or the like) to perform all or some of operations of the methods in the embodiments of the present disclosure.

In the foregoing embodiments of the present disclosure, the descriptions of the embodiments have respective focuses. For a part that is not described in detail in an embodiment, refer to related descriptions in other embodiments.

In several embodiments provided in the present disclosure, the disclosed client may be implemented in another manner. The apparatus embodiments described above are merely exemplary. For example, the division of the units is merely the division of logic functions, and may use other manners of division during actual implementation. For example, a plurality of units or components may be combined, or may be integrated into another system, or some features may be omitted or not performed. In addition, the coupling, or direct coupling, or communication connection between the displayed or discussed components may be indirect coupling or communication connection via some interfaces, units, or modules, and may be electrical or of other forms.

The respective operations in various embodiments may be combined in any manner. In all the embodiments, detailed description of all individual features present in one embodiment may each be used to explain each of the same individual features in another embodiment. For example, the operations of S21 and/or S22; S31 and/or S32; S41 and/or S42; S51 and/or S52; S61 to S63; S71 to S74; S101 to S102; S111 to S112 may each be used to combine with a particular operation in the steps S901 to S 904 when there is no conflict.

The units described as separate components may or may not be physically separated, and the components displayed as units may or may not be physical units, i.e., may be located in one place or may be distributed over a plurality of network units. Part or all of the units may be selected based on an actual requirement to implement the objectives of the solutions in embodiments of the present disclosure.

In addition, functional units in the embodiments of the present disclosure may be integrated into one processing unit, or each of the units may be physically separated, or two or more units may be integrated into one unit. The integrated unit may be implemented in the form of hardware, or may be implemented in the form of a software functional unit.

The foregoing descriptions are merely implementations of the present disclosure. Those of ordinary skill in the art may further make several improvements and modifications without departing from the principle of the present disclosure, and the improvements and modifications are considered to fall within the protection scope of the present disclosure.

**Claims**

1. A method for querying a data table, **characterized by** comprising:

   acquiring a data table query request, the data table query request being configured to request querying a second data table on a first computer device in order to obtain a second attribute value of a second attribute matching a first attribute value of a first attribute, the first attribute being arranged in a first data table on the first computer device;
   converting the data table query request into a first group of data sub-table query requests, the first group of data sub-table query requests being configured to request querying a second group of data sub-tables in order to obtain the second attribute value matching the first attribute value in a first group of data sub-tables, the first group of data sub-tables being data sub-tables obtained by splitting the first data table based on a plurality of attribute values of the first attribute, and the second group of data sub-tables being data sub-tables obtained by splitting the second data table based on a plurality of attribute values of the second attribute;
   generating a second group of data sub-table query requests, the second group of data sub-table query requests being different from the first group of data sub-table query requests; and
   transmitting the first group of data sub-table query requests and the second group of data sub-table query requests to the first computer device, and acquiring a first group of query results corresponding to the first group of data sub-table query requests and a second group of query results corresponding to the second group of data sub-table query requests from the first computer device.

2. The method according to claim 1, **characterized in that** the generating a second group of data sub-table query requests comprises:

   generating the second group of data sub-table query requests, the second group of data sub-table query requests being configured to request querying the second group of data sub-tables in order to obtain the second attribute value matching a third attribute value of a third attribute in a third group of data sub-tables, and the third group of data sub-tables being data sub-tables obtained by splitting a third data table on the first computer device based on a plurality of attribute values of the third attribute; and/or
   generating the second group of data sub-table query requests, the second group of data sub-table query requests being configured to request querying a fourth group of data sub-tables in order to obtain a fourth attribute value of a fourth attribute matching the first attribute value in the first group of data sub-tables, and the fourth group of data sub-tables being data sub-tables obtained by splitting a fourth data table on the first computer device based on a plurality of attribute values of the fourth attribute; and/or
   generating the second group of data sub-table query requests, the second group of data sub-table query requests being configured to request querying the fourth group of data sub-tables in order to obtain the fourth attribute value matching the third attribute value in the third group of data sub-tables.

3. The method according to claim 2, **characterized by** further comprising:

   searching a second computer device for an identifier of a data table meeting a first matching condition with the first data table, to obtain the identifier of the third data table, and acquiring, from the second computer device, the identifiers of the third group of data sub-tables having a mapping relationship with the third data table, the first matching condition comprising that a third value range is at least partially the same as a first value range, the first value range being a value range of the attribute values of the first attribute in the first data table, and the third value range being a value range of the attribute values of the third attribute in the third data table; and/or searching the second computer device for identifiers of data sub-tables meeting a second matching condition with the data sub-tables of the first group of data sub-tables, to obtain the identifiers of the third group of data sub-tables, the second matching condition comprising that a third value subrange is at least partially the same as a first value subrange, the first value subrange being a value range of the attribute values of the first attribute in the data sub-tables of the first group of data sub-tables, and the third value subrange being a value range of the attribute values of the third attribute in the data sub-tables of the third group of data sub-tables.

4. The method according to claim 3, **characterized in that**

the first matching condition further comprises: a first number of times is different from a third number of times, the first number of times being the number of times that a first value appears in the first attribute in the first data table, the third number of times being the number of times that the first value appears in the third attribute in the third data table, and the first value being a value same in the third value range and the first value range; and/or a first proportion is different from a third proportion, the first proportion being a proportion that the first value appears in the first attribute in the first data table, and the third proportion being a proportion that the first value appears in the third attribute in the third data table; and/or the second matching condition further comprises: a first sub-number of times is different from a third sub-number of times, the first sub-number of times being the number of times that a third value appears in the first attribute in one data sub-table of the first group of data sub-tables, the third sub-number of times being the number of times that the third value appears in the third attribute in another data sub-table of the third group of data sub-tables, and the third value being a value same in the third value subrange and the first value subrange; and/or a first sub-proportion is different from a third sub-proportion, the first sub-proportion being a proportion that the third value appears in the first attribute in one data sub-table of the first group of data sub-tables, and the third sub-proportion being a proportion that the third value appears in the third attribute in the another data sub-table of the third group of data sub-tables.

5. The method according to any one of claims 2 to 4, **characterized by** further comprising:

searching a second computer device for an identifier of a data table meeting a third matching condition with the second data table, to obtain the identifier of the fourth data table, and acquiring, from the second computer device, the identifiers of the fourth group of data sub-tables having a mapping relationship with the fourth data table, the third matching condition comprising that a fourth value range is at least partially the same as a second value range, the second value range being a value range of the attribute values of the second attribute in the second data table, and the fourth value range being a value range of the attribute values of the fourth attribute in the fourth data table; and/or searching the second computer device for identifiers of data sub-tables meeting a fourth matching condition with the data sub-tables of the second group of data sub-tables, to obtain the identifiers of the fourth group of data sub-tables, the fourth matching condition comprising that a fourth value subrange is at least partially the same as a second value subrange, the second value subrange comprising a value range of the attribute values of the second attribute in the data sub-tables of the second group of data sub-tables, and the fourth value subrange comprising a value range of the attribute values of the fourth attribute in the data sub-tables of the fourth group of data sub-tables.

6. The method according to claim 5, **characterized in that**

the third matching condition further comprises: a second number of times is different from a fourth number of times, the second number of times being the number of times that a second value appears in the second attribute in the second data table, the fourth number of times being the number of times that the second value appears in the fourth attribute in the fourth data table, and the second value being a value same in the fourth value range and the second value range; and/or a second proportion is different from a fourth proportion, the second proportion being a proportion that the second value appears in the second attribute in the second data table, the fourth proportion being a proportion that the second value appears in the fourth attribute in the fourth data table; and/or

the fourth matching condition further comprises: a second sub-number of times is different from a fourth sub-number of times, the second sub-number of times being the number of times that a fourth value appears in the second attribute in one data sub-table of the second group of data sub-tables, the fourth sub-number of times being the number of times that the fourth value appears in the fourth attribute in another data sub-table of the fourth group of data sub-tables, and the fourth value being a value same in the fourth value subrange and the second value subrange; and/or a second sub-proportion is different from a fourth sub-proportion, the second sub-proportion being a proportion that the fourth value appears in the second attribute in the one data sub-table, the fourth sub-proportion being a proportion that the fourth value appears in the fourth attribute in the another data sub-table.

7. The method according to any one of claims 2 to 6, **characterized in that**

in a case that the second group of data sub-table query requests are configured to request querying the second group of data sub-tables in order to obtain the second attribute value matching the third attribute value in the third group of data sub-tables, the second group of query results comprise third encrypted data of the third attribute value in the third group of data sub-tables and second encrypted data, queried from the second group of data sub-tables, of the second attribute value matching the third attribute value in the third group of data sub-tables; and/or

in a case that the second group of data sub-table query requests are configured to request querying the fourth group of data sub-tables in order to obtain the fourth attribute value matching the first attribute value in the first group of data sub-tables, the second group of query results comprise first encrypted data of the first attribute value in the first group of data sub-tables and fourth encrypted data, queried from the fourth group of data sub-tables, of the fourth attribute value matching the first attribute value in the first group of data sub-tables; and/or

in a case that the second group of data sub-table query requests are configured to request querying the fourth group of data sub-tables in order to obtain the fourth attribute value matching the third attribute value in the third group of data sub-tables, the second group of query results comprise the third encrypted data of the third attribute value in the third group of data sub-tables and the fourth encrypted data, queried from the fourth group of data sub-tables, of the fourth attribute value of the fourth attribute matching the third attribute value in the third group of data sub-tables; and/or

wherein the first group of query results comprise the first encrypted data of the first attribute value in the first group of data sub-tables and the second encrypted data, queried from the second group of data sub-tables, of the second attribute value matching the first attribute value in the first group of data sub-tables.

8. The method according to any one of claims 1 to 7, **characterized by** further comprising:

updating the first data table to a fifth data table based on a first difference between a first real data table and a second real data table, in a case that the first data table is a data table obtained by performing first smoothing process on the attribute values of the first attribute in the first real data table and the first real data table is updated to the second real data table, the first smoothing process making the attribute values of the first attribute in the first real data table appear in the first data table for the same number of times, and a second difference between the first data table and the fifth data table being the same as the first difference;

determining whether to perform second smoothing process on the second real data table based on the second real data table and the fifth data table;

performing the second smoothing process on the second real data table, to obtain a sixth data table, and replacing the first data table on the first computer device with the sixth data table, in a case of determining to perform the second smoothing process on the second real data table, the second smoothing process making the attribute values of the first attribute in the second real data table appear in the sixth data table for the same number of times; and

replacing the first data table on the first computer device with the fifth data table in a case of determining to skip the second smoothing process on the second real data table.

9. The method according to claim 8, **characterized in that** the determining whether to perform second smoothing process on the second real data table based on the second real data table and the fifth data table comprises:

determining a distribution difference between the attribute values of the first attribute in the second real data table and the attribute values of the first attribute in the fifth data table; determining to perform the second smoothing process on the second real data table in a case that the distribution difference is less than or equal to a preset threshold; and determining to skip the second smoothing process on the second real data table in a case that the distribution difference is greater than the preset threshold.

10. The method according to any one of claims 1 to 9, **characterized in that** the transmitting the first group of data sub-table query requests and the second group of data sub-table query requests to the first computer device comprises:

repeatedly performing the following operations, until both the first group of data sub-table query requests and the second group of data sub-table query requests are transmitted to the first computer device: randomly selecting one or more data sub-table query requests from the data sub-table query requests that are still not transmitted to the first computer device, in the first group of data sub-table query requests and the second group of data sub-table query requests, and transmitting the one or more randomly selected data sub-table query requests to the first computer device.

11. The method according to any one of claims 1 to 10, **characterized in that**

the first group of data sub-tables are data sub-tables obtained by splitting the first data table based on a value range of the attribute values of the first attribute, the value range of the attribute values of the first attribute in each data sub-table of the first group of data sub-tables being different; and/or the second group of data sub-tables are data sub-tables obtained by splitting the second data table based on a value range of the attribute values of the second attribute, the value range of the attribute values of the second attribute in each data sub-table of the second group of data sub-tables being different.

12. The method according to any one of claims 1 to 11, **characterized in that**

the data table query request is configured to request querying the second data table in order to obtain the second attribute value having a first matching relationship with the first attribute value, the first matching relationship referring to that a first hash value of the first attribute value is the same as a second hash value of the second attribute value, or the first hash value of the first attribute value is the same as a third hash value of a value in a first target value range, and the first target value range being a value range represented by one attribute value of one attribute corresponding to the second attribute in the second data table; and/or the first group of data sub-table query requests are configured to request querying the second group of data sub-tables in order to obtain the second attribute value having a second matching relationship with the first attribute value in the first group of data sub-tables, the second matching relationship referring to that the first hash value of the first attribute value is the same as the second hash value of the second attribute value, or the first hash value of the first attribute value is the same as a fourth hash value of a value in a second target value range, and the second target value range being a value range represented by one attribute value of one attribute corresponding to the second attribute in the second group of data sub-tables.

13. A data table query apparatus, **characterized by** comprising:

an acquisition unit, configured to acquire a data table query request, the data table query request being configured to request querying a second data table on a first computer device in order to obtain a second attribute values of a second attribute matching a first attribute value of a first attribute, the first attribute being arranged in a first data table on the first computer device; a conversion unit, configured to convert the data table query request into a first group of data sub-table query requests, the first group of data sub-table query requests being configured to request querying a second group of data sub-tables in order to obtain the second attribute value matching the first attribute value in a first group of data sub-tables, the first group of data sub-tables being data sub-tables obtained by splitting the first data table based on a plurality of attribute values of the first attribute, and the second group of data sub-tables being data sub-tables obtained by splitting the second data table based on a plurality of attribute values of the second attribute; a generation unit, configured to generate a second group of data sub-table query requests, the second group of data sub-table query requests being different from the first group of data sub-table query requests; and a transmission unit, configured to transmit the first group of data sub-table query requests and the second group of data sub-table query requests to the first computer device, and acquire a first group of query results corresponding to the first group of data sub-table query requests and a second group of query results corresponding to the second group of data sub-table query requests from the first computer device.

14. A computer-readable storage medium, comprising a program stored therein, when the program being run, the method according to any one of claims 1 to 12 being performed.

15. A computer program product, comprising a computer program or instructions, when the computer program or the instructions being executed by a processor, operations of the method according to any one of claims 1 to 12 being implemented.

16. An electronic device, comprising a memory and a processor, the memory having a computer program stored therein, and the processor being configured to perform the method according to any one of claims 1 to 12 via the computer program.

FIG. 1

Data table child

| Sequence number | Range | Grade |
|---|---|---|
| 1 | 90 to 100 | Excellent |
| 2 | 80 to 90 | Good |
| 3 | 60 to 80 | Pass |
| 4 | 0 to 60 | Fail |

Second attribute → Grade

Encrypt →

E(child) equivalent to a second data table

| Sequence number | Range | Grade |
|---|---|---|
| E(1) | E(90 to 100) | E(excellent) |
| E(2) | E(80 to 90) | E(good) |
| E(3) | E(60 to 80) | E(pass) |
| E(4) | E(0 to 60) | E(fail) |

E(child_1)

| Sequence number | Identifier | Range | Grade |
|---|---|---|---|
| E(1) | E(1) | E(90 to 100) | E(excellent) |
| E(2) | E(1) | E(80 to 90) | E(good) |

E(child_2)

| Sequence number | Identifier | Range | Grade |
|---|---|---|---|
| E(3) | E(1) | E(60 to 80) | E(pass) |
| E(4) | E(1) | E(0 to 60) | E(fail) |

FIG. 2

Data table weight

| Sequence number | Id | Excellent |
|---|---|---|
| 1 | id_1 | 80 |
| 2 | id_2 | 80 |
| 3 | id_3 | 66 |
| 4 | id_4 | 80 |
| 5 | id_5 | 60 |
| 6 | id_6 | 65 |

Encrypt ⇨

E(weight) (equivalent to a third data table)

| Sequence number | Id | Weight |
|---|---|---|
| E(1) | E(id_1) | E(80) |
| E(2) | E(id_2) | E(80) |
| E(3) | E(id_3) | E(66) |
| E(4) | E(id_4) | E(80) |
| E(5) | E(id_5) | E(60) |
| E(6) | E(id_6) | E(65) |

⇧

Third group of data sub-tables

E(weight_1)

| Sequence number | Identifier | Id | Weight |
|---|---|---|---|
| E(1) | E(1) | E(id_1) | E(80) |
| E(2) | E(1) | E(id_2) | E(80) |
| E(4) | E(1) | E(id_4) | E(80) |

E(weight_2)

| Sequence number | Identifier | Id | Weight |
|---|---|---|---|
| E(3) | E(1) | E(id_3) | E(66) |
| E(5) | E(1) | E(id_5) | E(60) |
| E(6) | E(1) | E(id_6) | E(65) |

FIG. 3

Data table level

| Sequence number | Range | Grade |
|---|---|---|
| 1 | 80 to 90 | Overweight |
| 2 | 70 to 80 | Normal |
| 3 | 60 to 70 | Good |
| 4 | 50 to 60 | Slightly thin |
| 5 | 40 to 50 | Very thin |

Encrypt →

E(level) equivalent to a fourth data table

| Sequence number | Range | Grade |
|---|---|---|
| E(1) | E(80 to 90) | E(overweight) |
| E(2) | E(70 to 80) | E(normal) |
| E(3) | E(60 to 70) | E(good) |
| E(4) | E(50 to 60) | E(slightly thin) |
| E(5) | E(40 to 50) | E(very thin) |

→

E(level_1)

| Sequence number | Identifier | Range | Grade |
|---|---|---|---|
| E(1) | E(1) | E(80 to 90) | E(overweight) |
| E(2) | E(1) | E(70 to 80) | E(normal) |
| E(3) | E(1) | E(60 to 70) | E(good) |

E(level_2)

| Sequence number | Identifier | Range | Grade |
|---|---|---|---|
| E(4) | E(1) | E(50 to 60) | E(slightly thin) |
| E(5) | E(1) | E(40 to 50) | E(very thin) |

FIG.4

40

E(stu_1')

| Identifier | Sequence number | Name | Score |
|------------|-----------------|------|-------|
| E(1) | E(1) | E(name_1) | E(80) |
| E(1) | E(2) | E(name_2) | E(90) |
| E(1) | E(3) | E(name_3) | E(80) |
| E(0) | E(4) | E(name_2') | E(90) |

Hash ciphertext table

| Hash value | Table | id | f_id |
|------------|-------|----|----|
| H(1) | E(stu_1') | 1 | 3 |

| Hash value | Table | id | f_id |
|------------|-------|----|----|
| H(2) | E(stu_1') | 2 | 4 |

| Hash value | Table | id | f_id |
|------------|-------|----|----|
| H(3) | E(stu_1') | 3 | 1 |

| Hash value | Table | id | f_id |
|------------|-------|----|----|
| H(4) | E(stu_1') | 4 | 2 |

FIG. 5

Sub-table mapping table

| Original table name | Original attribute | Data sub-table name | Data sub-table attribute | Data sub-table name | Data sub-table attribute |
|---|---|---|---|---|---|
| stu | Score | E(stu_1) | E(score_1) | E(stu_2) | E(score_2) |
| child | Grade | E(child_1) | E(grade_1) | E(child_2) | E(grade_2) |
| weight | Weight | E(weight_1) | E(weight_1) | E(weight_2) | E(weight_2) |
| level | Grade | E(level_1) | E(grade_1) | E(level_2) | E(grade_2) |

FIG. 6

EP 4 708 067 A1

Distribution information

| Data table name | Data sub-table name | Data sub-table attribute | Value range | Number of times that a value appears |
|---|---|---|---|---|
| E(stu) | E(stu_1) | E(score_1) | 75 to 100 | 90, appears 1 time 80, appears 2 times |
| | E(stu_2) | E(score_2) | 60 to 75 | 60, appears 1 time 65, appears 1 time 70, appears 1 time |
| E(child) | E(child_1) | E(grade_1) | Excellent and Good | Excellent, 1 time Good, 1 time |
| | E(child_2) | E(grade_2) | Pass and fail | Pass, 1 time Fail, 1 time |
| E(weight) | E(weight_1) | E(weight_1) | 80 to 100 | 80, appears 3 times |
| | E(weight_2) | E(weight_2) | 60 to 80 | 60, appears 1 time 65, appears 1 time 66, appears 1 time |
| E(level) | E(level_1) | E(grade_1) | Overweight, normal and good | Overweight, 1 time Good, 1 time Normal, 1 time |
| | E(level_2) | E(grade_2) | Slightly thin, very thin | Slightly thin, 1 time; very thin, 1 time |

FIG. 7

Client 102

First group of data sub-table query requests

Data table query request

Convert

Data sub-table query request 1

Data sub-table query request 2

Generate

Second group of data sub-table query requests

Data sub-table query request 3

Data sub-table query request 4

Transmit

Server 104

Acquire a first group of query results and a second group of query results

## FIG. 8

Acquire a data table query request, the data table query request being configured to request querying a second data table on a server in order to obtain a second attribute value of a second attribute matching a first attribute value of a first attribute, and the first attribute being arranged in a first data table on the server

S902

Convert the data table query request into a first group of data sub-table query requests, the first group of data sub-table query requests being configured to request querying a second group of data sub-tables in order to obtain the second attribute value of the second attribute matching the first attribute value of the first attribute in a first group of data sub-tables, the first group of data sub-tables being data sub-tables obtained by splitting the first data table based on the attribute values of the first attribute, and the second group of data sub-tables being data sub-tables obtained by splitting the second data table based on the attribute values of the second attribute

S904

Generate a second group of data sub-table query requests, the second group of data sub-table query requests being different from the first group of data sub-table query requests

S906

Transmit the first group of data sub-table query requests and the second group of data sub-table query requests to the server, and acquire a first group of query results corresponding to the first group of data sub-table query requests and a second group of query results corresponding to the second group of data sub-table query requests from the server

S908

FIG. 9

FIG. 10

Fourth group of data sub-tables

First group of data sub-tables

First attribute

Fourth attribute

E(stu_1')

| Sequence number | Identifier | Name | Score |
|---|---|---|---|
| E(1) | E(1) | E(name_1) | E(80) |
| E(2) | E(1) | E(name_2) | E(90) |
| E(3) | E(1) | E(name_3) | E(80) |
| E(4) | E(0) | E(name_2') | E(90) |

E(stu_2)

| Sequence number | Identifier | Name | Score |
|---|---|---|---|
| E(4) | E(1) | E(name_4) | E(70) |
| E(5) | E(1) | E(name_5) | E(60) |
| E(6) | E(1) | E(name_6) | E(65) |

Query

E(level_1)

| Sequence number | Identifier | Range | Grade |
|---|---|---|---|
| E(1) | E(1) | E(80 to 90) | E(overweight) |
| E(2) | E(1) | E(70 to 80) | E(normal) |
| E(3) | E(1) | E(60 to 70) | E(good) |

E(level_2)

| Sequence number | Identifier | Range | Grade |
|---|---|---|---|
| E(4) | E(1) | E(50 to 60) | E(slightly thin) |
| E(5) | E(1) | E(40 to 50) | E(very thin) |

FIG. 11

FIG. 12

First data table

Third data table

First group of data sub-tables

First attribute

Third group of data sub-tables

Third attribute

E(stu_1')

A first sub-proportion equals to 1/2

E(weight_1)

A third sub-proportion equals to 1

| Sequence number | Name | Score |
|---|---|---|
| E(1) | E(name_1) | E(80) |
| E(2) | E(name_2) | E(90) |
| E(3) | E(name_3) | E(80) |
| E(4) | E(name_2') | E(90) |

A second matching condition is met

| Sequence number | Id | Weight |
|---|---|---|
| E(1) | E(id_1) | E(80) |
| E(2) | E(id_2) | E(80) |
| E(4) | E(id_4) | E(80) |

E(stu_2)

E(weight_2)

| Sequence number | Name | Score |
|---|---|---|
| E(4) | E(name_4) | E(70) |
| E(5) | E(name_5) | E(60) |
| E(6) | E(name_6) | E(65) |

| Sequence number | Id | Weight |
|---|---|---|
| E(3) | E(id_3) | E(66) |
| E(5) | E(id_5) | E(60) |
| E(6) | E(id_6) | E(65) |

FIG. 13

EP 4 708 067 A1

E(child) equivalent to a second data table

Second attribute

E(level) equivalent to a fourth data table

Fourth attribute

| Sequence number | Range | Grade |
|---|---|---|
| E(1) | E(90 to 100) | E(excellent) |
| E(2) | E(80 to 90) | E(good) |
| E(3) | E(60 to 80) | E(pass) |
| E(4) | E(0 to 60) | E(fail) |

A third matching condition is met

A second proportion equals to 1/4

Second value range

| Sequence number | Range | Grade |
|---|---|---|
| E(1) | E(80 to 90) | E(over weight) |
| E(2) | E(70 to 80) | E(normal) |
| E(3) | E(60 to 70) | E(good) |
| E(4) | E(50 to 60) | E(slightly thin) |
| E(5) | E(40 to 50) | E(very thin) |

A fourth proportion equals to 1/5

Fourth value range

FIG. 14

EP 4 708 067 A1

E(child) equivalent to a second data table

Second group of data sub-tables

E(child_1)

| Sequence number | Score range | Grade |
|---|---|---|
| E(1) | E(90 to 100) | E(excellent) |
| E(2) | E(80 to 90) | E(good) |

Second attribute

A second sub-number of times is 1, and a second sub-proportion equals to 1/2

E(child_2)

| Sequence number | Score range | Grade |
|---|---|---|
| E(3) | E(60 to 80) | E(pass) |
| E(4) | E(0 to 60) | E(fail) |

⟷

A fourth matching condition is met

E(level) equivalent to a fourth data table

Fourth group of data sub-tables

E(level_1)

| Sequence number | Range | Grade |
|---|---|---|
| E(1) | E(80 to 90) | E(overweight) |
| E(2) | E(70 to 80) | E(normal) |
| E(3) | E(60 to 70) | E(good) |

Fourth attribute

A fourth sub-number of times is 1, and a fourth sub-proportion equals to 1/3

E(level_2)

| Sequence number | Range | Grade |
|---|---|---|
| E(4) | E(50 to 60) | E(slightly thin) |
| E(5) | E(40 to 50) | E(very thin) |

FIG. 15

Second group of query results

E(weight_1)

| Identifier | Weight | Grade |
|---|---|---|
| E(1) | E(80) | E(good) |
| E(1) | E(80) | E(good) |
| E(1) | E(80) | E(good) |

E(weight_2)

| Identifier | Weight | Grade |
|---|---|---|
| E(1) | E(66) | E(pass) |
| E(1) | E(60) | E(pass) |
| E(1) | E(65) | E(pass) |

First group of query results

E(stu_1')

| Identifier | Score | Grade |
|---|---|---|
| E(1) | E(80) | E(good) |
| E(1) | E(90) | E(excellent) |
| E(1) | E(80) | E(good) |
| E(0) | E(90) | E(excellent) |

E(stu_2)

| Identifier | Score | Grade |
|---|---|---|
| E(1) | E(70) | E(pass) |
| E(1) | E(60) | E(pass) |
| E(1) | E(65) | E(pass) |

Second group of query results

E(stu_1')

| Identifier | Score | Grade |
|---|---|---|
| E(1) | E(80) | E(overweight) |
| E(1) | E(90) | E(overweight) |
| E(1) | E(80) | E(overweight) |
| E(0) | E(90) | E(overweight) |

E(stu_2)

| Identifier | Score | Grade |
|---|---|---|
| E(1) | E(70) | E(normal) |
| E(1) | E(60) | E(good) |
| E(1) | E(65) | E(good) |

Second group of query results

E(weight_1)

| Identifier | Weight | Grade |
|---|---|---|
| E(1) | E(80) | E(overweight) |
| E(1) | E(80) | E(overweight) |
| E(1) | E(80) | E(overweight) |

E(weight_2)

| Identifier | Weight | Grade |
|---|---|---|
| E(1) | E(66) | E(good) |
| E(1) | E(60) | E(good) |
| E(1) | E(65) | E(good) |

FIG. 16

First real data table:

| Attribute values | 2 | 3 | 3 | 4 | 5 |
|---|---|---|---|---|---|

First smoothing process

First data table:

| Attribute values | 2 | 2 | 3 | 3 | 4 | 4 | 5 | 5 |
|---|---|---|---|---|---|---|---|---|

First difference

Second real data table:

| Attribute values | 2 | 3 | 3 | 4 | 5 | 5 | 6 |
|---|---|---|---|---|---|---|---|

Second difference

Fifth data table:

| Attribute values | 2 | 2 | 3 | 3 | 4 | 4 | 5 | 5 | 5 | 6 |
|---|---|---|---|---|---|---|---|---|---|---|

Second smoothing process

Sixth data table:

| Attribute values | 2 | 2 | 2 | 3 | 3 | 3 | 4 | 4 | 4 | 5 | 5 | 5 | 6 | 6 | 6 |
|---|---|---|---|---|---|---|---|---|---|---|---|---|---|---|---|

FIG. 17

FIG. 18

```
┌─────────────────────────────┐
│  Determine chi-square values │
│ between the attribute values of a │              Operation
│ first attribute in a second real data │ ～～～      S1902
│  table and the attribute values of │
│   the first attribute in a fifth data │
│              table            │
└─────────────────────────────┘
                │
                ▼
                              Operation
                                S1904
         ╱╲                                    ┌──────────────┐
        ╱    ╲                                 │ Determine to skip │       Operation
       ╱ Determine whether ╲     No            │    the second    │ ～～～    S1906
      ╱ the chi-square value is ╲ ┄┄┄┄┄┄┄▶     │ smoothing process │
       ╲ less than or equal to a ╱             │  on the second real │
        ╲ preset threshold ╱                   │    data table    │
         ╲╱                                    └──────────────┘
          │
         Yes
          │
          ▼
┌──────────────────┐
│ Determine to perform │           Operation
│ the second smoothing │ ～～～       S1908
│  process on the second │
│    real data table   │
└──────────────────┘
```

FIG. 19

First group of data sub-table query requests

| Data sub-table query request 1 |

Data sub-table query request 2

Randomly select

Transmit → Server 104

Second group of data sub-table query requests

Data sub-table query request 3

Data sub-table query request 4

Randomly select

EP 4 708 067 A1

FIG. 20

**Data table**

| Attribute values |
| --- |
| 10 |
| 10 |
| 10 |
| 10 |
| 10 |
| 2 |
| 3 |
| 4 |
| 5 |
| 6 |

Split →

**Data sub-table 1**

| Attribute values |
| --- |
| 10 |
| 10 |
| 10 |
| 10 |
| 10 |

**Data sub-table 2**

| Attribute values |
| --- |
| 2 |
| 3 |
| 4 |
| 5 |
| 6 |

FIG. 21

| Hash value | Table | id | f_id |
| --- | --- | --- | --- |
| H(3) | stu_1' | 1 | 3 |

Same hash values

| Hash value | Table | id | f_id |
| --- | --- | --- | --- |
| H(3) | Child_1 | 4 | 8 |

FIG. 22

EP 4 708 067 A1

Data table query request

Client　　Data sub-table query request 1　　First group of query results

Select*from stu join Child om
stu.score=child.grade;

Sub-table mapping table

Distribution information

Select*from stu join Child om
E(stu_1').score=E(child_2).grade;

Query and rewrite

Select*from stu join Child om
E(stu_2).score=E(child_1).grade;

Data sub-table query request 2

Filter (filter)
Delete

| Identifier | Grade | Score |
|---|---|---|
| E(1) | E(good) | E(80) |
| E(1) | E(excellent) | E(90) |
| E(1) | E(good) | E(80) |
| E(0) | E(excellent) | E(90) |

E(stu_1')

| Hash value | Table | id | f_id |
|---|---|---|---|
| H(1) | E(stu_1') | 1 | 3 |

| Hash value | Table | id | f_id |
|---|---|---|---|
| H(2) | E(stu_1') | 2 | 4 |

| Hash value | Table | id | f_id |
|---|---|---|---|
| H(1) | E(stu_1') | 3 | 1 |

| Hash value | Table | id | f_id |
|---|---|---|---|
| H(2) | E(stu_1') | 4 | 2 |

...

Hash-join

Server

E(child_1)

| Hash value | Grade | Table | id | f_id |
|---|---|---|---|---|
| H(1) | E(good) | E(child_1) | 1 | -1 |

| Hash value | Grade | Table | id | f_id |
|---|---|---|---|---|
| H(2) | E(excellent) | E(child_1) | 2 | -1 |

Results

H(1)

H(2)

...

FIG. 23

FIG. 24

EP 4 708 067 A1

```
┌─────────────────────────┐
│  ┌───────────────────┐  │
│  │  Acquisition      │  │
│  │  unit 2502        │  │
│  └───────────────────┘  │
│          │              │
│  ┌───────────────────┐  │
│  │  Conversion       │  │
│  │  unit 2504        │  │
│  └───────────────────┘  │
│          │              │
│  ┌───────────────────┐  │
│  │  Generation       │  │
│  │  unit 2506        │  │
│  └───────────────────┘  │
│          │              │
│  ┌───────────────────┐  │
│  │  Transmission     │  │
│  │  unit 2508        │  │
│  └───────────────────┘  │
│                         │
│  Data table query       │
│  apparatus              │
└─────────────────────────┘
```

FIG. 25

```
                                                          2602
         2608                          ┌──────────────────────┐
       ┌─────────┐                      │       Memory         │
       │ Display │                      │  ┌────────────────┐  │
       └─────────┘                      │  │  Acquisition   │  │
            │           2610            │  │  unit 2502     │  │
            │                           │  └────────────────┘  │
────────────┼─────────────────┬────────│  ┌────────────────┐  │
            │        2604      │        │  │  Conversion    │  │
   2606     │                  │        │  │  unit 2504     │  │
  ┌─────────┴──┐   ┌───────────┴──┐     │  └────────────────┘  │
  │ Transmissio│   │  Processor   │     │  ┌────────────────┐  │
  │ n apparatus│   └──────────────┘     │  │  Generation    │  │
  └────────────┘                        │  │  unit 2506     │  │
                                        │  └────────────────┘  │
                                        │  ┌────────────────┐  │
                                        │  │  Transmission  │  │
                                        │  │  unit 2508     │  │
                                        │  └────────────────┘  │
                                        │         ⋮            │
                                        └──────────────────────┘
```

FIG. 26

FIG. 27

## INTERNATIONAL SEARCH REPORT

| International application No. |
|---|
| **PCT/CN2024/101287** |

| A. | CLASSIFICATION OF SUBJECT MATTER |
|---|---|

G06F16/242(2019.01)i; G06F16/2455(2019.01)i; G06F21/62(2013.01)i

According to International Patent Classification (IPC) or to both national classification and IPC

| B. | FIELDS SEARCHED |
|---|---|

Minimum documentation searched (classification system followed by classification symbols)

IPC: G06F16/-,G06F21/-

Documentation searched other than minimum documentation to the extent that such documents are included in the fields searched

Electronic data base consulted during the international search (name of data base and, where practicable, search terms used)

CNABS, CNTXT, CNKI: 表, 查询, 搜索, 第二, 不同, 关联, 匹配, 相关, 对应, 属性, 字段, 值, 拆分, 子表, 分组, 分区, 生成, 构建, 频率, 加密, 密文, 干扰, 混淆; VEN, USTXT, EPTXT, IEEE: table, query+, search+, second, match, corresponding, attribute, property, value, split, subtable, group, subset, generat+, frequency, encrypt+, interfere

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116842039 A (TENCENT TECHNOLOGY (SHENZHEN) CO., LTD.) 03 October 2023 (2023-10-03) claims 1-16 | 1-16 |
| A | CN 107515882 A (ALIBABA GROUP HOLDING LIMITED) 26 December 2017 (2017-12-26) description, paragraphs [0021]-[0110] | 1-16 |
| A | CN 103995879 A (HUAWEI TECHNOLOGIES CO., LTD.) 20 August 2014 (2014-08-20) entire document | 1-16 |
| A | CN 113297269 A (ALIBABA GROUP HOLDING LIMITED) 24 August 2021 (2021-08-24) entire document | 1-16 |
| A | CN 110489653 A (BEIJING JINDI TECHNOLOGY CO., LTD.) 22 November 2019 (2019-11-22) entire document | 1-16 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 August 2024** | **24 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/101287** |

### C.    DOCUMENTS CONSIDERED TO BE RELEVANT

| Category* | Citation of document, with indication, where appropriate, of the relevant passages | Relevant to claim No. |
|---|---|---|
| A | CN 106022163 A (SHANGHAI PINGAN NETWORK TECHNOLOGY CO., LTD.) 12 October 2016 (2016-10-12)<br>entire document | 1-16 |
| A | US 2020201853 A1 (INTERMIX SOFTWARE, INC.) 25 June 2020 (2020-06-25)<br>entire document | 1-16 |

Form PCT/ISA/210 (second sheet) (July 2022)

**INTERNATIONAL SEARCH REPORT**
Information on patent family members

International application No.

**PCT/CN2024/101287**

| Patent document cited in search report | | | Publication date (day/month/year) | Patent family member(s) | | | Publication date (day/month/year) |
|---|---|---|---|---|---|---|---|
| CN | 116842039 | A | 03 October 2023 | None | | | |
| CN | 107515882 | A | 26 December 2017 | CN | 107515882 | B | 25 December 2020 |
| CN | 103995879 | A | 20 August 2014 | CN | 103995879 | B | 15 December 2017 |
| CN | 113297269 | A | 24 August 2021 | HK | 40059171 | A0 | 06 May 2022 |
| CN | 110489653 | A | 22 November 2019 | None | | | |
| CN | 106022163 | A | 12 October 2016 | None | | | |
| US | 2020201853 | A1 | 25 June 2020 | US | 2020201861 | A1 | 25 June 2020 |
| | | | | US | 2020201867 | A1 | 25 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310810125X